# FASCICULE DE BREVET EUROPEEN

(11) **EP 4 374 305 B1**
(45) Date de publication et mention de la délivrance du brevet: **10.09.2025**
(21) Numéro de dépôt: 22754850.0
(22) Date de dépôt: 20.07.2022
(51) Int. Cl.: G06Q 10/06, G06Q 10/02, B60L 58/12

(54) **PROCÉDÉ ET SYSTÈME POUR MODIFIER LA DURÉE DE MISE EN VEILLE ET/OU LA FRÉQUENCE DE RÉACTIVATION ET/OU LA DURÉE DE RÉVEIL D'UN ÉQUIPEMENT INFORMATIQUE EMBARQUÉ DANS UN VÉHICULE APPARTENANT À UNE FLOTTE DE VÉHICULES PARTAGÉS**
VERFAHREN UND SYSTEM ZUR ÄNDERUNG DER RUHEZEIT UND/ODER DER WECKFREQUENZ UND/ODER DER WECKDAUER EINER RECHENVORRICHTUNG AN BORD EINES FAHRZEUGS
METHOD AND SYSTEM FOR MODIFYING THE STANDBY DURATION AND/OR THE REACTIVATION FREQUENCY AND/OR THE WAKE DURATION OF A COMPUTING DEVICE ON BOARD A VEHICLE BELONGING TO A FLEET OF SHARED VEHICLES

(30) Priorité: 20.07.2021 FR 2107805
(43) Date de publication de la demande: 29.05.2024
(73) Titulaire: Vulog, 06200 Nice (FR)
(72) Inventeur: COLON, François, 13013 MARSEILLE (FR)
(74) Mandataire: Roman, Alexis
(86) Numéro de dépôt international: PCT/EP2022/070394
(87) Numéro de publication internationale: WO 2023/001908

(56) Documents cités:
- EP-A1- 3 581 431
- EP-A2- 1 868 095
- DE-A1- 102018 202 999
- DE-A1- 102019 213 094
- US-A1- 2019 168 711
- US-A1- 2021 184 273

## Description

### Domaine technique.

L'invention concerne un procédé et un système pour modifier la durée de mise en veille et/ou la fréquence de réactivation et/ou la durée de réveil d'un équipement informatique embarqué dans un véhicule appartenant à une flotte de véhicules partagés.

Le domaine de l'invention concerne notamment les méthodes permettant de contrôler des équipements informatiques embarqués dans des véhicules.

### État de la technique.

Un service de partage de véhicule (en anglais « *car-sharing* ») ou véhicules en libre-service est un système dans lequel un gestionnaire (une société, une agence publique, une coopérative, une association, ou un groupe d'individus) met à la disposition de « clients » ou membres du service un ou plusieurs véhicules (ci-après « flotte de véhicules »). Plutôt que de disposer d'un véhicule personnel, l'utilisateur du service dispose d'un véhicule qu'il ne paye que pour la durée de son besoin. En d'autres termes, lorsqu'un utilisateur utilise un véhicule partagé, il est facturé d'un certain montant. Le montant facturé dépendant généralement du nombre de kilomètres parcourus et/ou du temps d'utilisation du véhicule et/ou du modèle ou type de véhicule. Le reste du temps, le véhicule est destiné à être utilisé par d'autres membres.

Plusieurs actions doivent être opérées sur les véhicules de la flotte telles que leur nettoyage, leur recharge en batterie ou en carburant, leur regroupement dans une zone définie, des réparations et/ou entretiens, etc. Il apparaît en effet important qu'un utilisateur puisse disposer d'un véhicule parfaitement opérationnel avant son utilisation.

Un des avantages des véhicules partagés réside dans le fait qu'un utilisateur peut libérer son véhicule où il le souhaite dans une zone géographique déterminée (par exemple une ville). Toutefois, la position de ces véhicules n'est pas figée dans le temps, mais mouvante (d'où le terme anglais de « free-floating »), de sorte qu'il est difficile de prédire à l'avance leur emplacement et donc d'anticiper les actions à y exécuter.

Ces différentes actions à exécuter sont généralement supervisées par un serveur informatique du gestionnaire de la flotte. Habituellement, ce serveur analyse l'état et/ou les caractéristiques de chaque véhicule de la flotte et, le cas échéant, détermine une ou plusieurs actions à exécuter en fonction de cette analyse. Les instructions pour exécuter ces actions sont ensuite transmises sous forme de requêtes, au travers d'un réseau de données, et à destination d'équipements informatiques embarqués dans les véhicules et/ou à destination de terminaux mobiles d'opérateurs en charge d'exécuter tout ou partie de ces actions. En fonction de la taille de la flotte, le nombre de requêtes émises par le serveur peut être relativement important, de sorte que la quantité de données numériques transmises (débit numérique) peut atteindre la bande passante et arriver à saturation.

En outre, les équipements informatiques embarqués dans les véhicules sont généralement mis en veille temporairement lorsque lesdits véhicules ne sont pas utilisés, cela afin de limiter la consommation électrique de leur batterie. Or, pour transmettre une requête à un équipement informatique initialement dans un état de veille, il est nécessaire de le réactiver (ou plus familièrement de le « réveiller ») afin qu'il puisse communiquer avec le serveur informatique. Ce réveil peut se faire automatiquement, à une fréquence régulière prédéterminée ou préparamétrée (par exemple toutes les 5 minutes) ou peut se faire de manière discrétionnaire dès qu'une requête doit être transmise à l'équipement. Le réveil de l'équipement peut par exemple être mis en œuvre en préparamétrant la durée de sa mise en veille et/ou sa fréquence de réactivation et/ou sa durée de réveil. Il peut également être mis en œuvre par l'envoi d'une commande d'activation, se présentant par exemple sous la forme d'un message de type SMS (Short Message Service) ou équivalent, par le serveur informatique à destination de l'équipement informatique. La réception de cette commande entraîne le réveil de l'équipement informatique et sa connexion automatique au serveur. L'équipement informatique maintient alors une connexion temporaire au serveur (par exemple durant 15 minutes) jusqu'à sa prochaine mise en veille. Or, le réveil d'un équipement informatique, et subsidiairement le maintien de la connexion au serveur qui s'en suit induisent une consommation électrique relativement importante de la batterie qui y est connectée.

Le document US 2021/184273 A1 décrit un système pour prédire les performances d'une batterie de véhicule.

L'invention vise à remédier à tous ou partie des inconvénients précités. Dans le contexte précité, un objectif de l'invention est notamment d'optimiser les ressources des batteries connectées aux équipements informatiques embarqués dans les véhicules, en particulier réduire la consommation desdites batteries. D'autres caractéristiques décrites plus avant dans la description visent à atteindre tout ou partie des objectifs suivants :
- réduire le débit numérique correspondant à la transmission des requêtes par le serveur et de façon plus générale, réduire les ressources informatiques mobilisées par le serveur ;
- assurer une mise en état opérationnelle optimale des véhicules partagés au moment de leur utilisation.

### Présentation de l'invention.

La solution proposée par l'invention est un procédé selon la revendication

La division d'une zone géographique (par exemple une ville) en sous-zones géographiques (par exemple des arrondissements, des quartiers, des périmètres délimités par des rues), permet d'évaluer précisément la répartition des véhicules de la flotte dans la zone géographique. Dans chaque sous-zone géographique, le processus informatique logique permet de calculer un temps moyen d'attente. Par exemple, un temps moyen d'attente de 5 heures dans une première sous-zone SG1, indique que statistiquement, un véhicule libre se trouvant dans cette première sous-zone a une probabilité élevée de ne pas être réservé pendant 5 heures. Et avec un temps moyen d'attente de 15 minutes dans une deuxième sous-zone SG2, un véhicule libre se trouvant dans cette deuxième sous-zone a une probabilité élevée d'être réservé dans un temps relativement court. Le serveur peut alors répartir et/ou cibler les requêtes en prenant en compte les valeurs calculées des temps moyens d'attente. Par exemple, les requêtes relatives à des opérations de nettoyage ou de recharge de batterie sont transmises en priorité aux véhicules libres localisés dans une sous-zone possédant un temps moyen d'attente faible, c'est-à-dire aux véhicules qui ont statistiquement le plus de chance d'être utilisés rapidement.

Selon un premier exemple illustratif, la flotte présente cent véhicules dont les batteries doivent être rechargées à un instant T. Cinquante de ces véhicules sont situés dans une première sous-zone SG1 dont le temps moyen d'attente est de 5 heures. Les cinquante autres véhicules sont situés dans une deuxième sous-zone SG2 dont le temps moyen d'attente est de 15 minutes. Selon les techniques habituelles de l'art antérieur, le serveur doit générer et transmettre à l'instant T, cent requêtes. Le serveur peut maintenant ne générer et transmettre à l'instant T, que cinquante requêtes pour recharger les batteries des cinquante véhicules de la flotte se trouvant dans la deuxième sous-zone SG2. Les autres requêtes destinées aux 50 autres véhicules se trouvant dans la première sous-zone SG1 pourront être transmises ultérieurement, de manière échelonnée dans le temps, de sorte que le débit numérique correspondant à la transmission de l'ensemble des requêtes et/ou les ressources informatiques mobilisées par le serveur seront réduits (le débit initial de cent requêtes par unité de temps T étant réduit à cinquante requêtes par unité de temps T).

Selon un deuxième exemple illustratif, la flotte présente dix véhicules dont il est déterminé à un instant T qu'ils doivent subir une révision de contrôle, lesquelles révisions nécessitent un temps d'intervention d'environ 2 heures chacune. Trois de ces véhicules sont situés dans la première sous-zone SG1 dont le temps moyen d'attente est de 5 heures. Les sept autres véhicules sont situés dans la deuxième sous-zone SG2 dont le temps moyen d'attente est de 15 minutes. Selon les techniques habituelles de l'art antérieur, le serveur doit générer et transmettre à l'instant T, dix requêtes pour intervenir sur les dix véhicules. Le serveur peut maintenant ne générer et transmettre à l'instant T, seulement trois requêtes pour réviser les trois véhicules de la flotte se trouvant dans la première sous-zone SG1 où le temps moyen d'attente est supérieur au temps moyen d'intervention. Les autres requêtes destinées aux sept autres véhicules se trouvant dans la deuxième sous-zone SG2 pourront être transmises ultérieurement, de manière échelonnée dans le temps de sorte que le débit numérique correspondant à la transmission de l'ensemble des requêtes et/ou les ressources informatiques mobilisées par le serveur seront réduits (le débit initial de dix requêtes par unité de temps T étant réduit à trois requêtes par unité de temps T).

Ainsi, on peut cibler les véhicules dont la probabilité d'être utilisés est en adéquation avec le type d'action à exécuter. On peut alors mieux répartir dans le temps la transmission des requêtes par le serveur, de sorte que le débit numérique nécessaire à la transmission desdites requêtes est réduit. Également, les ressources informatiques mobilisées par le serveur sont mieux utilisées et moins sollicitées. Ce ciblage des véhicules permet en outre de maintenir à un niveau élevé la probabilité qu'un utilisateur trouve un véhicule partagé parfaitement opérationnel au moment de son utilisation.

En outre, on peut prioriser et/ou cibler des actions (par exemple des recharges de batteries) notamment sur des véhicules situés dans des sous-zones ayant un temps moyen d'attente faible. Les véhicules situés dans des sous-zones affectées d'un temps moyen d'attente élevé, pourront être réveillés ultérieurement ou à des fréquences moins élevées de sorte que la consommation de leur batterie sera réduite. Le serveur peut notamment transmettre à ces véhicules une requête adaptée pour modifier les paramètres de fonctionnement de leur équipement informatique de manière à réduire la consommation de leur batterie. Par exemple, une requête entraînant leur mise en veille dès leur mise en disponibilité dans la sous-zone et/ou adaptée pour allonger la durée de leur mise en veille et/ou adaptée pour réduire leur fréquence de réveil et/ou adaptée pour réduire leur durée de réveil.

En tout état de cause, la division en sous-zones géographiques permet de calculer un temps moyen d'attente propre à chacune de ces sous-zones. Les durées de mise en veille et/ou fréquences de réactivation et/ou durées de réveil ne vont donc pas être modifiées de la même manière d'une sous-zone à une autre. On peut ainsi contrôler précisément et de manière discriminante le fonctionnement des équipements informatiques embarqués dans les véhicules, selon les sous-zones dans lesquelles ils sont localisés, de sorte à discriminer la gestion des ressources des batteries. Les temps moyens d'attente calculés agissent directement sur le fonctionnement des équipements dans le but d'optimiser les ressources des batteries connectées auxdits équipements.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation, l'algorithme d'apprentissage statistique est entraîné pour calculer de manière prédictive, à une date donnée et à un instant donné, le temps moyen d'attente dans chaque sous-zone géographique.
- Selon un mode de réalisation, les données d'entrée d'apprentissage de l'algorithme d'apprentissage statistique proviennent de l'historique de requêtes de réservation effectives de véhicules de la flotte, et de tout ou partie des données suivantes : la localisation des sous-zones géographiques depuis lesquelles des requêtes de réservation ont été émises au court des dernières X heures, avec X compris entre 1 et 168 ; la distance des sous-zones géographiques par rapport à un point prédéfini de la zone géographique ; pour chaque véhicule de la flotte auxquels sont affectés un statut « disponible à la réservation » ou un statut « indisponible à la réservation », les heures effectives auxquelles leur statut passe de « disponible à la réservation » à « indisponible à la réservation » et inversement ; des données climatologiques ; des données relatives à une date et heure d'évènements intervenus dans la zone géographique et/ou dans l'une de ses sous-zones ; le nombre d'utilisateurs ayant libéré des véhicules de la flotte au court des dernières Y heures, avec Y compris entre 1 et 168 dans chaque sous-zone géographique. Les données de sortie d'apprentissage sont les temps d'attente réels des véhicules de la flotte dans chaque sous-zone géographique.
- Selon le mode de réalisation du paragraphe précédent, au moment du calcul, les données d'entrée de l'algorithme d'apprentissage entraîné sont tout ou partie des données suivantes : l'identification d'une sous-zone géographique concernée ; la localisation des sous-zones géographiques depuis lesquelles des requêtes de réservation ont été émises au court des dernières X heures, avec X compris entre 1 et 168 ; la distance de la sous-zone géographique concernée par rapport à un point prédéfini de la zone géographique ; des données climatologiques dans la zone géographique et/ou dans la sous-zone géographique concernée ; des données relatives à l'heure d'évènements intervenus et/ou à intervenir à la date donnée, dans la zone géographique et/ou dans la sous-zone géographique concernée et/ou dans les autres sous-zones géographiques ; le nombre d'utilisateurs ayant libéré des véhicules de la flotte au court des dernières Y heures, avec Y compris entre 1 et 168 dans la sous-zone géographique concernée. La donnée de sortie de l'algorithme d'apprentissage entraîné est le temps moyen d'attente dans la sous-zone géographique concernée.
- Selon un mode de réalisation, les données d'entrée d'apprentissage de l'algorithme d'apprentissage statistique proviennent de l'historique de requêtes de réservation effectives de véhicules de la flotte, et de tout ou partie des données suivantes : le type et le modèle chaque véhicule de la flotte ; la localisation des véhicules de la flotte au moment de leur réservation ; la distance des véhicules de la flotte au moment de leur réservation par rapport à un point prédéfini de la zone géographique ; pour chaque véhicule de la flotte auxquels sont affectés un statut « disponible à la réservation » ou un statut « indisponible à la réservation », les heures effectives auxquelles leur statut est passé de « disponible à la réservation » à « indisponible à la réservation » et inversement ; des données climatologiques ; des données relatives à la date et l'heure d'évènements intervenus dans la zone géographique et/ou dans l'une de ses sous-zones géographiques ; le nombre d'utilisateurs ayant libéré des véhicules de la flotte au court des dernières Y heures, avec Y compris entre 1 et 168 dans chaque sous-zone géographique. Les données de sortie d'apprentissage sont les temps d'attente réels des véhicules de la flotte.
- Selon le mode de réalisation du paragraphe précédent, au moment du calcul, les données d'entrée de l'algorithme d'apprentissage entraîné sont tout ou partie des données suivantes : l'identification d'un véhicule concerné de la flotte ; la localisation du véhicule concerné au moment du calcul ; pour le véhicule concerné, les heures effectives auxquelles son statut est passé de « disponible » à « indisponible » et inversement au court des dernières X heures, avec X compris entre 1 et 168 ; la distance séparant le véhicule concerné d'un point prédéfini de la zone géographique au moment du calcul ; des données climatologiques dans la zone géographique et/ou dans une sous-zone géographique concernée ; des données relatives à l'heure d'évènements intervenus et/ou à intervenir à la date donnée, dans la zone géographique et/ou dans les sous-zones géographiques ; le nombre d'utilisateurs ayant libéré des véhicules au court des dernières Y heures, avec Y compris entre 1 et 168, dans les différentes sous-zones géographiques. La donnée de sortie de l'algorithme d'apprentissage entraîné est le temps moyen d'attente du véhicule concerné.

- Selon un mode de réalisation, le temps moyen d'attente dans une sous-zone géographique est calculé en moyennant les temps moyens d'attente des véhicules disponibles à la réservation se trouvant dans ladite sous-zone.
- Selon un mode de réalisation le procédé comprend les étapes suivantes : sélectionner un ou plusieurs véhicules disponibles à la réservation, les valeurs calculées des temps moyens d'attente étant utilisées comme critères de sélection ; transmettre à des véhicules de la flotte, des requêtes entraînant l'exécution d'actions sur lesdits véhicules, les requêtes étant transmises en priorité aux véhicules sélectionnés à l'étape précédente.
- Selon un mode de réalisation, si à la fin du temps moyen d'attente calculé, aucune requête n'a été transmise au véhicule ou si ledit véhicule n'a pas été réservé, alors modifier à nouveau les paramètres de mise en veille et/ou fréquence de réactivation et/ou durée de réveil de l'équipement dudit véhicule.

Un autre aspect de l'invention concerne un système selon la revendication 7.

Encore autre aspect de l'invention concerne un produit programme d'ordinateur comprenant des instructions de code pour l'exécution d'un procédé selon la revendication 1, lorsqu'il est exécuté par un serveur informatique.

Un autre aspect non couvert par l'invention revendiquée concerne un procédé de transmission de requêtes entraînant l'exécution d'actions sur des véhicules appartenant à une flotte de véhicules partagés, comprenant les étapes suivantes :
- générer les requêtes depuis un serveur informatique,
- transmettre les requêtes dans un réseau de données, à destination d'un ou plusieurs équipements connectés au serveur pour exécuter les actions,
ledit procédé comprenant en outre les étapes suivantes :
a) définir une zone géographique où sont localisés les véhicules et opérer un maillage de ladite zone pour la diviser en sous-zones géographiques,
b) mettre en œuvre un processus informatique logique adapté pour calculer, pour chaque sous-zone géographique, un temps moyen d'attente pendant lequel un véhicule disponible à la réservation dans la sous-zone concernée ne sera pas réservé,
c) sélectionner un ou plusieurs véhicules disponibles à la réservation, les valeurs calculées des temps moyens d'attente étant utilisées comme critères de sélection,
d) transmettre en priorité les requêtes relatives aux actions à exécuter sur les véhicules sélectionnés à l'étape c).

Selon un mode de réalisation du procédé précité non couvert par l'invention revendiquée, ledit procédé comprend les étapes suivantes : - a1) affecter un statut « nettoyé » aux véhicules nettoyés de la flotte et un statut « non-nettoyé » aux véhicules non-nettoyés de ladite flotte ; - c1) sélectionner un ou plusieurs véhicules ayant un statut « non-nettoyé », qui sont disponibles à la réservation et qui sont géolocalisés dans la sous-zone géographique où le temps moyen d'attente calculé est le plus faible ; - d1) générer et transmettre une requête pour exécuter une action de nettoyage, laquelle requête est transmise en priorité pour les véhicules sélectionnés à l'étape à l'étape c1).

Selon un mode de réalisation du procédé précité non couvert par l'invention revendiquée, l'action de nettoyage exécutée à l'étape d1) consiste à déclencher un moyen de nettoyage équipant ledit véhicule.

Selon un mode de réalisation du procédé précité non couvert par l'invention revendiquée, le déclenchement du moyen de nettoyage entraîne une aérosolisation d'un désinfectant virucide et/ou bactéricide à l'intérieur de l'habitacle du véhicule.

Selon un mode de réalisation du procédé précité non couvert par l'invention revendiquée, le déclenchement du moyen de nettoyage entraîne un éclairement temporaire de l'habitacle du véhicule, par des lampes à ultraviolets.

Selon un mode de réalisation du procédé précité non couvert par l'invention revendiquée, ledit procédé comprend les étapes c2) et d2) suivantes, en complément ou en alternative respectivement des étapes c1) et d1) : - c2) sélectionner un ou plusieurs véhicules ayant un statut « nettoyé », qui sont disponibles à la réservation et qui sont géolocalisés dans la sous-zone géographique où le temps moyen d'attente calculé est supérieur au temps moyen d'attente calculé le plus faible ; - d2) déplacer le ou les véhicules sélectionnés à l'étape c2) vers la sous-zone géographique où le temps moyen d'attente calculé est le plus faible.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] illustre un premier exemple de division d'une zone géographique en sous-zones géographiques.
[Fig. 2] illustre un deuxième exemple de division d'une zone géographique en sous-zones géographiques.
[Fig. 3] illustre un troisième exemple de division d'une zone géographique en sous-zones géographiques.
[Fig. 4] schématise des données d'entrée et de sortie d'un modèle entraîné d'intelligence artificielle, utilisé dans l'invention.
[Fig. 5] schématise des données d'entrée et de sortie d'un autre modèle entraîné d'intelligence artificielle, utilisé dans l'invention.
[Fig. 6] illustre la répartition des véhicules d'une flotte dans des sous-zones géographiques.
[Fig. 7] représente un synoptique des principales étapes d'un procédé permettant la transmission priorisée de requêtes.
[Fig. 8] schématise des moyens de nettoyage installés dans l'habitacle d'un véhicule.
[Fig. 9] schématise d'autres moyens de nettoyage installés dans l'habitacle d'un véhicule.
[Fig. 10] illustre un exemple de la variation du temps moyen d'attente sur une journée.
[Fig. 11] illustre la répartition des véhicules d'une flotte et d'opérateurs dans des sous-zones géographiques.

### Description des modes de réalisation.

Le procédé et le système objets de l'invention engendrent des manipulations d'éléments physiques, notamment des signaux (électriques ou magnétiques) et des données numériques, capables d'être stockés, transférés, combinés, comparés, ..., et permettant d'aboutir à un résultat souhaité.

L'invention met en œuvre une ou plusieurs applications informatiques exécutées par des équipements ou serveur informatique. Par souci de clarté, il faut comprendre au sens de l'invention que « *un équipement ou serveur fait quelque chose* » signifie « *l'application informatique exécutée par une unité de traitement de l'équipement ou du serveur fait quelque chose* ». Tout comme « *l'application informatique fait quelque chose* » signifie « *l'application informatique exécutée par l'unité de traitement de l'équipement ou du serveur fait quelque chose* »*.*

Encore par souci de clarté, la présente invention fait référence à un ou plusieurs « *processus informatiques logiques* »*.* Ces derniers correspondent aux actions ou résultats obtenus par l'exécution d'instructions d'une ou plusieurs applications informatiques. Aussi, il faut également comprendre au sens de l'invention que « *un processus informatique logique est adapté pour faire quelque chose* » signifie « *les instructions d'une application informatique exécutées par une unité de traitement font quelque chose* »*.*

Encore par souci de clarté, les précisions suivantes sont apportées à certains termes utilisés dans la description et les revendications :
- « *Ressource informatique* » peut être compris de façon non limitative comme : composant, matériel, logiciel, fichier, connexion à un réseau informatique, quantité de mémoire RAM, espace de disque dur, bande passante, vitesse de processeur, nombre de CPU, etc.
- « *Serveur informatique* » peut être compris de façon non limitative comme : dispositif informatique (matériel ou logiciel) comportant des ressources informatiques pour réaliser les fonctions d'un serveur et qui offre des services, ordinateur, pluralité d'ordinateurs, serveur virtuel sur internet, serveur virtuel sur Cloud, serveur virtuel sur une plate-forme, serveur virtuel sur une infrastructure locale, réseaux de serveurs, cluster, noeud, ferme de serveurs, ferme de noeuds, etc.
- « Requête » désigne un ordre d'exécution pouvant suivre un protocole de communication et comprenant des paramètres en entrée (question, informations, instructions ...) et éventuellement des paramètres en retour (réponse, information, ...), pouvant se présenter dans un format lié au protocole employé.
- « *Unité de traitement* » peut être compris de façon non limitative comme : processeur, microprocesseurs, CPU (pour Central Processing Unit), etc.
- « *Application informatique* » peut être comprise comme : logiciel, programme informatique, micros-programme informatique, lignes de codes exécutables, software, etc.
- « *Réseau de données* » peut être compris de façon non limitative comme : réseau internet, réseau cellulaire, réseau satellite, etc. C'est un ensemble d'équipements informatiques reliés entre eux pour échanger, de manière sécurisée ou non, des informations et/ou des données selon un protocole de communication (ISDN, Ethernet, ATM, IP, CLNP, TCP, HTTP, ...).
- « *Base de données* » peut être comprise de façon non limitative comme un ensemble structuré et organisé de données enregistrées sur des supports accessibles par des équipements informatiques et pouvant être interrogées, lues et mises à jour. Des données peuvent y être insérées, récupérées, modifiées et/ou détruites. La gestion et l'accès à la base de données peuvent être assurés par un ensemble d'applications informatiques qui constituent un système de gestion de base de données (SGBD).
- « *Service* » peut être compris de façon non limitative comme l'ensemble des fonctionnalités proposé et assuré par un serveur et/ou par au moins un équipement informatique. Le service peut comprendre par exemple, les fonctionnalités suivantes : réservation d'un véhicule, localisation (réelle et/ou estimée) d'un véhicule, verrouillage/déverrouillage d'un véhicule, etc.
- « *Véhicule partagé* » peut être compris de façon non limitative comme un véhicule de location ou un véhicule en libre-service (en anglais « *car sharing* ») mis à la disposition de « clients » ou membres. Le véhicule peut être : une voiture autonome (apte à rouler sur route, sans intervention d'un conducteur), une voiture ou un camion (moteur thermique et/ou électrique), un deux-roues motorisé (moteur thermique et/ou électrique), un vélo (classique ou avec assistance électrique), une trottinette (classique ou avec assistance électrique), une planche à roulettes, un monocycle électrique, un gyropode, un bateau, etc. Lorsqu'un utilisateur utilise un véhicule partagé, il peut être facturé d'un certain montant dépendant généralement du nombre de kilomètres parcourus et/ou du temps d'utilisation du véhicule et/ou du modèle ou type de véhicule.
- Tel qu'utilisé ici, sauf indication contraire, l'utilisation des adjectifs ordinaux « premier », « deuxième », etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

### Maillage d'une zone géographique

Au sens de l'invention, une zone géographique peut consister en une région géographique, par exemple une ville (prédéfinie dans une base de données et correspondant à une région définie par un ou plusieurs codes postaux ou par une région délimitée par des rues et définissant des quartiers connus), une zone définissant un cercle, un carré, un rectangle ayant pour centre une position géographique spécifique (ex : un centre-ville) et un rayon, un diamètre ou une diagonale de longueur prédéfinie (ex : rayon de 20 Km).

Selon un mode de réalisation, la zone géographique est définie par un ensemble de données numériques. Ces données peuvent par exemple provenir de sources cartographiques publiques et privées et/ou de données satellites. Elles peuvent être téléchargées depuis une base de données dédiée telle que OpenStreetMap ^{®}. Ces données numériques sont ensuite enregistrées dans un serveur informatique.

On opère un maillage de la zone géographique de manière à la diviser en sous-zones géographiques. Selon un mode de réalisation, cette division est réalisée automatiquement par le serveur informatique où sont enregistrées les données de la zone géographique. Par exemple, le serveur informatique peut être configuré pour diviser automatiquement toute zone géographique en sous-zones de 1 km² chacune. Le serveur informatique peut également être configuré pour diviser automatiquement toute zone géographique en sous-zones annulaires concentriques dont le centre commun est une position géographique spécifique et dont les rayons sont incrémentés de 1 km. Selon un autre mode de réalisation, la division de la zone géographique est réalisée de manière discrétionnaire depuis le serveur informatique. Par exemple, pour une première zone géographique, la division est faite par arrondissements (chaque arrondissement d'une ville correspondant à une sous-zone), pour une deuxième zone géographique, la division est faite par quartiers (chaque quartier correspondant à une sous-zone), pour une troisième zone géographique, la division est faite par rue (chaque rue correspondant à une sous-zone), etc. Un logiciel de maillage (par exemple Gmsh ^{®}) est préférentiellement exécuté par le serveur informatique pour réaliser la subdivision de la zone géographique.

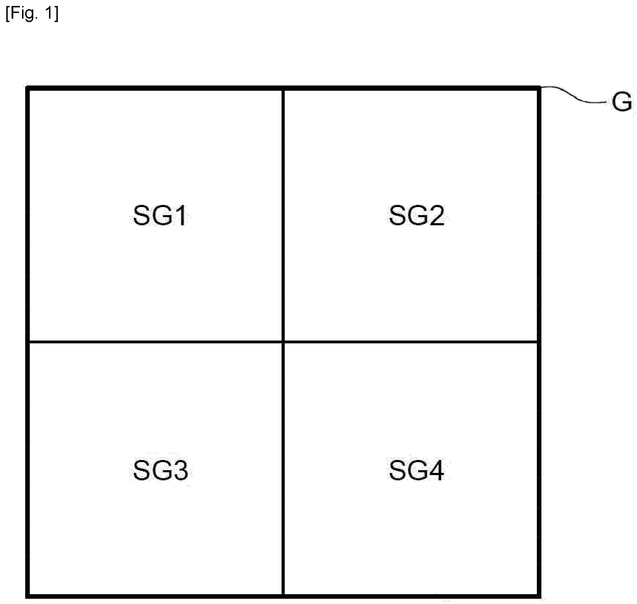

Sur la figure 1, la zone géographique G est en forme de carré divisé en quatre sous-zones SG1-SG4. Un nombre plus ou moins important de sous-zones peuvent être prévues (par exemple de 2 à 100 sous-zones). Sur la figure 1, ces sous-zones sont de taille identique, mais peuvent être de tailles différentes. Également, les sous-zones SG1-SG4 sont de forme carrée, mais peuvent avoir une autre forme (rectangulaire, polygonale, ..)

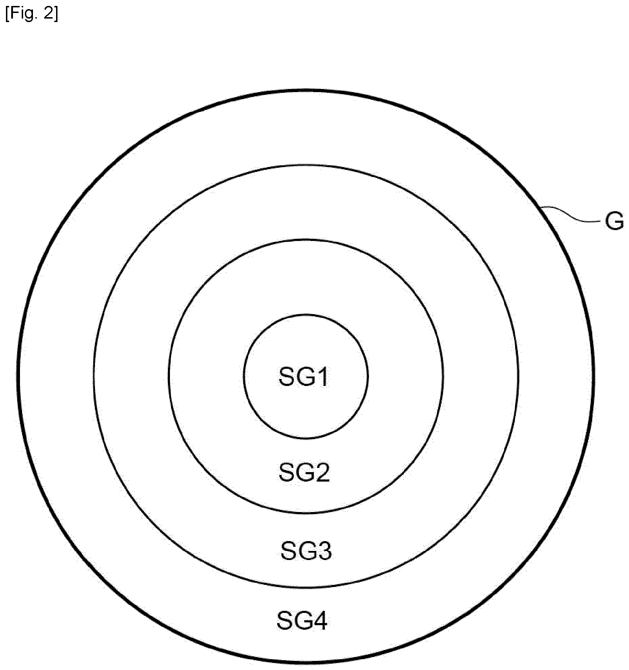

Sur la figure 2, la zone géographique G est en forme disque et les sous-zones SG1-SG4 en forme d'anneaux concentriques. Le centre de la zone G et des sous-zones SG1-SG4 peut par exemple correspondre à un point singulier, tel que le centre d'une ville, une zone commerciale, un aéroport, etc. Les rayons des sous-zones SG1-SG4 peuvent être incrémentés d'une distance régulière ou irrégulière.

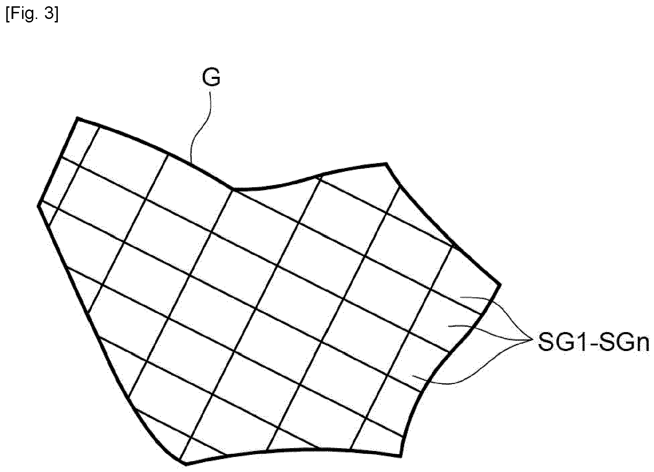

Sur la figure 3, la zone géographique G est en forme de polygone et les sous-zones SG1-SGn en forme de mailles polygonales. Selon un mode de réalisation, le nombre n, la forme et/ou la taille des mailles SG1-SGn sont définis automatiquement par le serveur en fonction de la forme et/ou de la taille de la zone G. Selon un autre mode de réalisation, le nombre n, la forme et/ou la taille des mailles SG1-SGn sont paramétrés de manière singulière depuis le serveur.

### Statuts des véhicules.

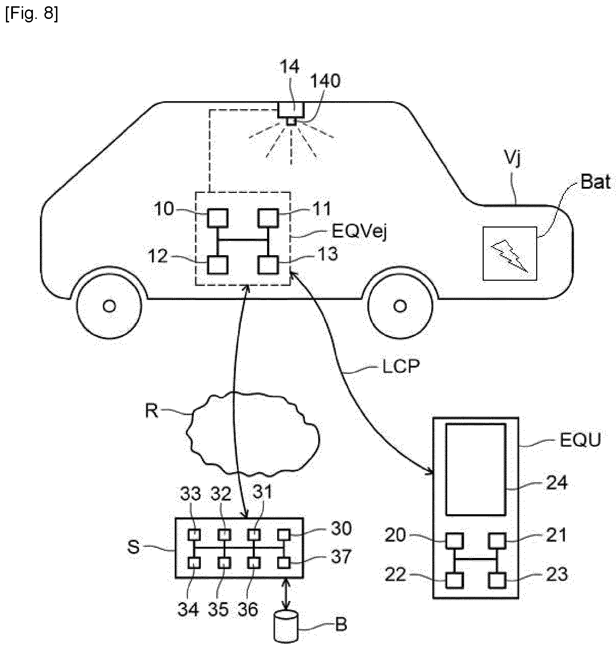

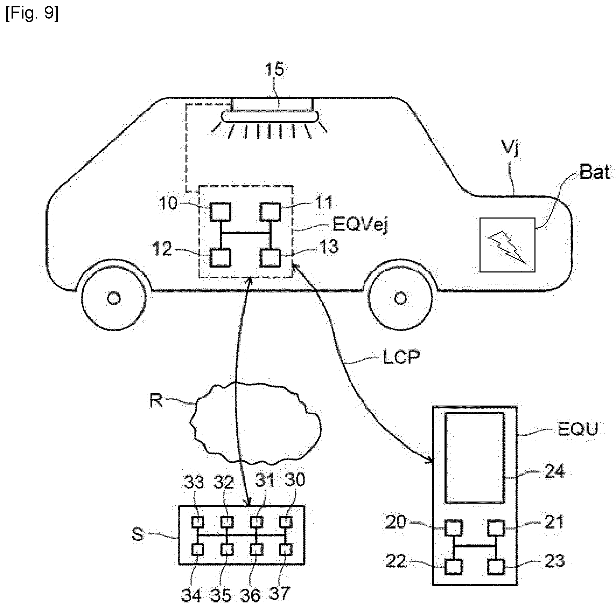

En se rapportant aux figures 8 et 9, chaque véhicule Vj intègre préférentiellement un équipement informatique embarqué EQVej. Cet équipement peut par exemple faire partie d'un boîtier télématique permettant au véhicule d'échanger avec un serveur informatique distant S des informations telles que la position géographique, la vitesse, l'état de capteurs embarqués (niveau de charge de batterie, niveau de carburant dans le réservoir, pression de pneus, état des feux de croisement ou autres éclairages, état d'une chaine de vélo, ...), etc. Cet échange se fait au travers d'un réseau de données R. L'équipement informatique EQVej peut également être un équipement dédié, indépendant du boîtier télématique.

Chaque équipement embarqué EQVej comprend, entre autres ressources informatiques, une unité de traitement 10, un émetteur/récepteur de signaux 11, et une ou plusieurs mémoires 12 dans laquelle est enregistrée une application informatique. L'équipement embarqué EQVej comprend également une interface de communication 13. Ces différents éléments sont connectés au moins à l'unité de traitement 10 par un bus de communication. Chaque équipement embarqué EQVej est connecté à une batterie Bat qui peut être la batterie générale du véhicule ou une batterie dédiée.

Les instructions de l'application informatique enregistrée dans la mémoire 12, lorsqu'elles sont exécutées par l'unité de traitement 10, permettent de réaliser des étapes du procédé qui sont décrites plus avant dans la description. La mémoire 12 est également adaptée pour enregistrer un certain nombre d'autres d'informations.

L'émetteur/récepteur 11 est adapté pour échanger des signaux, via une liaison sans fil de courte portée LCP, avec un terminal utilisateur EQU décrit plus avant dans la description et/ou avec les équipements embarqués des autres véhicules. La liaison LCP a par exemple une portée inférieure ou égale à 100 mètres. Les signaux échangés sont préférentiellement des signaux infrarouges ou des signaux radiofréquences. La liaison LCP utilise préférentiellement un protocole de communication de la famille suivante : Bluetooth^{®}, Wifi^{®}, Z-Wave^{®}, ANT, ZIGBEE^{®}, Infrarouge.

L'interface de communication 13, par exemple GSM, 3G, 4G ou Wifi^{®}, est adapté pour établir une liaison de communication sans fil avec une interface de communication du serveur S, au travers du réseau de données R.

Chaque véhicule Vj est associé à un numéro d'identification unique (par exemple un code numérique ou un code alphanumérique) enregistré dans une base de données B accessible au serveur S.

À un instant donné, les véhicules Vj peuvent être :
- avec un statut dit « disponible » à la réservation : le véhicule est stationné (garé) et/ou non réservé,
- avec un statut dit « indisponible » à la réservation : soit le véhicule est stationné, mais déjà réservé par un utilisateur (statut « indisponible-réservé »), soit le véhicule est en cours de fonctionnement (statut « indisponible-en fonctionnement »).

Selon un mode de réalisation, les statuts suivants sont également affectés aux véhicules Vj :
- statut dit « nettoyé » : le véhicule est nettoyé entre sa précédente utilisation et sa prochaine utilisation. En d'autres termes, le véhicule est nettoyé dans l'intervalle de temps où le statut « disponible » passe à « indisponible ».
- statut dit « non-nettoyé » : le véhicule n'a pas été nettoyé entre sa précédente utilisation et sa prochaine utilisation. En d'autres termes, le véhicule n'a pas été nettoyé dans l'intervalle de temps où le statut « disponible » passe à « indisponible ».

L'utilisateur dispose d'au moins un terminal mobile EQU. Ce dernier consiste préférentiellement en un téléphone intelligent (Smartphone), une tablette numérique, un ordinateur portable, etc. Sur les figures 8 et 9, le terminal EQU intègre une unité de traitement 20, un émetteur/récepteur de signaux 21 et une ou plusieurs mémoires 22 dans laquelle est enregistrée une application informatique pour la mise en œuvre du service (« application-service »), une interface de communication 23 et une interface graphique 24 du type écran tactile. Ces différents éléments sont connectés au moins à l'unité de traitement 20 par un bus de communication. Il comprend également les ressources informatiques permettant de réaliser des étapes du procédé de transmission priorisée de requêtes. L'émetteur/récepteur 21 est similaire à celui des équipements embarqués EQVej. L'interface de communication 23, par exemple GSM, 3G, 4G ou Wifi^{®}, est adapté pour établir une liaison de communication sans fil avec une interface de communication du serveur distant S, au travers du réseau de données R.

Selon un mode de réalisation, pour télécharger l'application-service, et avoir les droits d'accès au service, l'utilisateur U doit préalablement s'enregistrer auprès d'un serveur de gestion de droits qui peut être ou non le serveur distant précité. Selon un mode de réalisation, l'enregistrement de l'utilisateur U est réalisé auprès d'un service web du serveur distant S associé au service. L'enregistrement comporte l'enregistrement d'un identifiant utilisateur et/ou d'un identifiant du terminal EQU. Il peut s'agir d'un port, d'une adresse IP, d'une adresse MAC ou toute autre adresse ou combinaison permettant d'identifier le terminal EQU. Selon un mode de réalisation, l'utilisateur est préinscrit à partir d'un logiciel et est connu du fait qu'un identifiant est enregistré dans la base de données B.

Sur les figures 8 et 9, le serveur S intègre une unité de traitement 30, une ou plusieurs mémoires 31, une interface de communication 32, un module de localisation 33, un module de calcul d'itinéraire 34, un calculateur 35, un générateur de carte numérique 36, un module traitement informatique 37, qui sont mutuellement connectées via un bus. Une ou plusieurs applications informatiques sont enregistrées dans la ou les mémoires 31 et dont les instructions, lorsqu'elles sont exécutées par l'unité de traitement 30, permettent de réaliser les fonctionnalités décrites plus avant dans la description.

Les modules de localisation 33, de calcul d'itinéraire 34, de calcul 35, de traitement 37 et le générateur de carte 36, sont des composants matériels et/ou logiciels du serveur S.

Le serveur S met régulièrement à jour, préférentiellement en temps réel, la base de données B. Cette base de données regroupe notamment : l'identifiant de chaque véhicule Vi, leur statut (« disponible » ou « indisponible », et « nettoyé » ou « non nettoyé »), leur position géographique. D'autres informations et/ou données peuvent être regroupées dans la base de données B, le cas échéant, notamment les taux de charge des batteries des véhicules à moteur électrique ou les taux de remplissage des réservoirs de carburant des véhicules à moteur thermique, l'état de leurs capteurs, etc. La base de données B peut être enregistrée dans une zone mémoire du serveur S ou être distante dudit serveur.

L'information sur le statut « disponible » ou « indisponible » d'un véhicule Vj est transmise au serveur S en temps réel ou à des intervalles de temps prédéfinis (par exemple toutes les 5 minutes). Cette information peut être transmise au serveur S, par exemple depuis l'équipement embarqué EQVej du véhicule Vj suite à une détection d'un évènement. Cet évènement est par exemple généré par une action de l'utilisateur sur une commande spécifique aménagée sur le tableau de bord du véhicule Vj. Cette commande peut être actionnée lorsqu'un utilisateur a stationné son véhicule et libéré le véhicule. Le statut passe alors de « indisponible » à « disponible ». Cet évènement peut également être généré automatiquement lorsque le véhicule reste inactif pendant une certaine période, par exemple 15 minutes.

Lorsque le serveur S reçoit une requête de réservation de la part de l'utilisateur et qu'il peut faire droit à cette requête (c'est-à-dire qu'un véhicule est disponible à la réservation), ledit serveur fait passer le statut d'un véhicule de « disponible » à « indisponible ». Cette requête de réservation est préférentiellement générée via le terminal mobile utilisateur EQU.

L'information sur le statut « nettoyé » ou « non nettoyé » d'un véhicule Vj est également transmise au serveur S en temps réel ou à des intervalles de temps prédéfinis (par exemple toutes les 5 minutes après que le statut du véhicule passe de « indisponible » à « disponible »). Cette information peut être transmise automatiquement au serveur S, par exemple depuis l'équipement embarqué EQVej du véhicule Vj suite à la fin du cycle de nettoyage du moyen de nettoyage, comme expliqué plus avant dans la description. Le statut passe alors de « non-nettoyé » à « nettoyé ». Cette information peut encore être transmise au serveur S, en réponse à une action d'un opérateur qui actionne une commande spécifique aménagée sur le tableau de bord du véhicule Vi.

La position géographique des véhicules Vj peut être obtenue par satellite (système GPS ou Galileo) ou par un système de triangulation (par exemple, un système utilisant les cellules d'un réseau 4G) ou par une combinaison des deux systèmes de localisation. L'équipement EQVej d'un véhicule Vj comporte avantageusement un composant permettant d'obtenir une information de géo-localisation, par exemple un composant GPS, qui peut être récupérée par le module de localisation 33 du serveur S. Le module de localisation 33 peut récupérer automatiquement cette information en interrogeant en temps réel ou à intervalles de temps régulier (par exemple toutes les 5 minutes), les équipements EQVej. Les équipements EQVej peuvent également transmettre automatiquement cette information au module de localisation 33 (sans répondre à une requête d'interrogation), en temps réel ou à intervalles de temps régulier (par exemple toutes les 5 minutes). La position géographique de chaque véhicule Vj est alors enregistrée dans la base de données B.

Selon une alternative, la position géographique d'un véhicule Vj peut correspondre à la position géographique (obtenue par satellite et/ou par un système de triangulation) du terminal mobile EQU de l'utilisateur. Cette position géographique est automatiquement récupérée par le module de localisation 33 ou transmise à celui-ci. La position géographique du terminal EQU peut être obtenue de la même façon. Par satellite et/ou ou par un système de triangulation. Le terminal EQU comporte avantageusement un composant, par exemple un composant GPS, permettant d'obtenir une information de géo-localisation qui peut être automatiquement récupérée par le module de localisation 33 ou transmise à celui-ci.

Les informations concernant le taux de charge des batteries ou le taux de remplissage du réservoir d'un véhicule Vj est également transmise au serveur S en temps réel ou à des intervalles de temps prédéfinis (par exemple toutes les 5 minutes). Ces informations sont transmises au serveur S depuis l'équipement embarqué EQVej du véhicule Vj.

### Notion de temps moyen d'attente

L'invention introduit la notion de « temps moyen d'attente » qui correspond à une période temporelle estimée pendant lequel un véhicule de la flotte ayant un statut « disponible » ne sera pas réservé. En d'autres termes, le temps moyen d'attente correspond à l'intervalle de temps pendant lequel le statut du véhicule reste à « disponible ». Par exemple, un temps moyen d'attente de 1 heure indique que statistiquement, un véhicule qui vient d'être libéré et dont le statut passe de « indisponible » à « disponible » a une probabilité élevée de ne pas être réservé (i.e. le statut reste à « disponible » et ne passe pas à « indisponible ») pendant 1 heure. Cette probabilité est avantageusement supérieure à 50% et préférentiellement supérieure à 90%.

Selon un mode de réalisation, ce temps d'attente moyen (ITm-SGi) est calculé par le calculateur 35 du serveur S pour chaque sous-zone SGi. Ce calcul peut être effectué une ou plusieurs fois par jour, par exemple dès que le statut d'un véhicule passe de « indisponible » à « disponible ».

### Premier mode de calcul du temps moyen d'attente

Selon un premier mode de calcul, le calculateur 35 prend en compte l'historique des requêtes de réservation effectives de véhicules dans la sous-zone concernée, pour en déduire un temps moyen d'attente. Par exemple, s'il y a en moyenne 4 requêtes de réservation par jour (24 heures) dans la sous-zone SG1, le temps moyen d'attente sera de 6 heures (24/4=6). Un véhicule qui sera libéré (i.e dont le statut passe de « indisponible » à « disponible ») dans la sous-zone SG1, attendra en moyenne 6 heures avant d'être à nouveau réservé et utilisé. Selon un autre exemple, s'il y a en moyenne 48 requêtes de réservation par jour dans la sous-zone SG2, le temps moyen d'attente sera de 30 minutes (24/48=0,5). Un véhicule qui est libéré dans la sous-zone SG2, attendra en moyenne 30 minutes avant d'être à nouveau réservé et utilisé. Les requêtes prises en compte pour le calcul peuvent être celles de l'heure, de la veille, de la semaine, du mois, de l'année précédant ledit calcul. Il s'agit préférentiellement de toutes les requêtes enregistrées dans le serveur S au moment du calcul. En effet, plus le nombre de données analysées est élevé, meilleure sera la probabilité que le temps moyen d'attente calculé converge vers le temps réel d'attente. Le temps moyen d'attente ainsi calculé est constant et ne varie pas au cours d'une journée.

### Deuxième mode de calcul du temps moyen d'attente

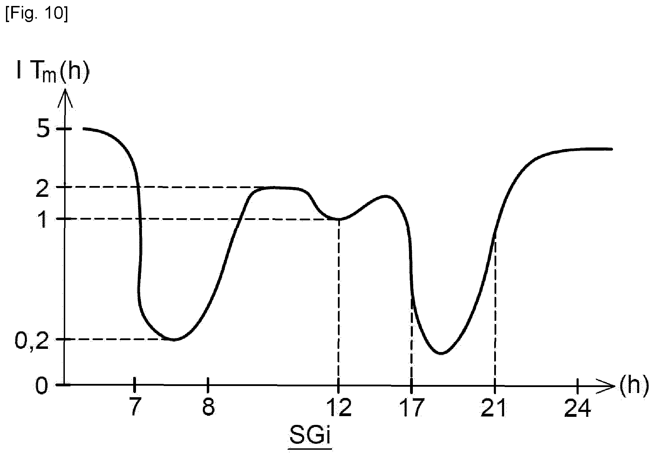

Le premier mode de calcul permet d'aboutir à une valeur acceptable du temps moyen d'attente. Toutefois, il apparaît que ce temps moyen d'attente n'est pas constant, mais varie au cours d'une journée. La figure 10 illustre à titre d'exemple explicatif seulement, une telle variation. Par exemple, dans la sous-zone SGi, le temps moyen d'attente ITm-SGi est minimal (environ 15 minutes) entre 7h et 8h (typiquement les heures de départ au travail) et entre 17h et 21h (typiquement les heures de retour du travail). Et il est maximal avant 7h et après 21h (environ 5 heures). Entre 8h et 17h, le temps moyen d'attente ITm-SGi est compris entre 1 heure et 2 heures. En outre, pour une même sous-zone, ces variations du temps moyen d'attente ne sont pas les mêmes d'un jour à l'autre. Par exemple, la courbe d'un dimanche ou d'un jour férié diffère de celle d'un jour travaillé de la semaine. Il en est de même pendant des périodes de vacances, ou lorsqu'un évènement particulier a lieu dans une sous-zone (par exemple un concert ou un match de football), les requêtes de réservation dans la sous-zone concernée et/ou dans les autres sous-zones pouvant augmentées. Les données climatologiques (température, précipitations, pollution, ...) peuvent également influencer la valeur du temps d'attente.

Pour améliorer la précision du calcul du temps moyen d'attente ITm-SGi et pour se rapprocher au plus près de la valeur du temps réel d'attente, il apparaît donc avantageux d'analyser plus en détail les données historiques des requêtes de réservation effectives (les requêtes réellement reçues par le serveur) et de prendre en compte divers autres paramètres (date, heure, données climatologiques, évènements, ...). Aussi, selon un second mode de calcul, le calculateur 35 exécute une application informatique basée sur un modèle d'intelligence artificielle. Ce modèle est avantageusement basé sur un algorithme d'apprentissage statistique, supervisé ou non supervisé. On peut notamment utiliser la méthode des k plus proches voisins (par exemple en implémentant un algorithme dédié accessible depuis la bibliothèque Python ^{®} Scikit Learn ^{®}), ou un réseau de neurones artificiels, par exemple le réseau ADALINE (Adaptive Linear Element) utilisant la méthode des moindres carrés et/ou une méthode statistique. On peut également utiliser un réseau bayésien qui est un modèle probabiliste représentant des variables aléatoires et leurs dépendances conditionnelles via un DAG (Directed Acyclic Graph) et des tables de probabilités. Il sert principalement à représenter une connaissance, donner une règle de décision, prévoir, et déterminer des hypothèses de causalité. L'homme du métier peut notamment se référer aux publications suivantes concernant les réseaux bayésiens : BRIDE, « Méthodes de construction de réseaux bayésiens », Université de Strasbourg, Aout 2016, pages 1-34 ; HECKERMAN, « A bayesian approach to learning causal network », MSR-TR-95-04, MicrosoftResearch, 1995 ; PEARL, « Probabilistic Reasoning in Intelligent Systems : Networks of Plausible Inference », Morgan Kaufmann Publishers, 1988.

L'algorithme d'apprentissage statistique repose sur un raisonnement automatisé du serveur SERV qui conduit à des déterminations probabilistes et/ou des déterminations fondées sur des statistiques. Le serveur SERV peut ainsi définir le temps moyen d'attente dans chaque sous-zone géographique (SG1-SG4), à une date donnée et à un instant donné, à partir d'un ensemble d'événements observés et/ou à partir de données d'événements observés.

Les données d'entrée d'apprentissage proviennent de l'historique des requêtes de réservation effectives reçues par le serveur S et archivées dans la base de données B (notamment : date, heure, identification de véhicule réservé), combiné à d'autres données enregistrées dans ladite base.

Les meilleurs résultats en termes de précision de calcul sont obtenus lorsque ces autres données sont : la localisation des sous-zones géographiques SG1-SG4 depuis lesquelles des requêtes de réservation ont été émises au court des dernières X heures (avec X par exemple compris entre 1 et 168) ; la distance des sous-zones par rapport à un point prédéfini de la zone G (par exemple le centre-ville) ; pour chaque véhicule de la flotte, les heures effectives auxquelles leur statut passe de « disponible » à « indisponible » et inversement ; des données climatologiques (par exemple récupérées depuis des sites publics tels que https://donneespubliques.meteofrance.fr) ; des données relatives à la date et l'heure d'évènements (concerts, matchs de football, ...) intervenus dans la zone G et/ou dans l'une de ses sous-zones ; le nombre d'utilisateurs ayant libéré des véhicules de la flotte au court des dernières Y heures (avec Y par exemple compris entre 1 et 168) dans chaque sous-zone ; etc. Tout ou partie de ces données d'entrées peuvent être utilisés. Les données de sortie d'apprentissage sont les temps d'attente réels des véhicules dans chaque sous-zone. L'apprentissage du modèle d'intelligence artificielle est effectué préalablement sur le serveur S ou sur un autre serveur. L'apprentissage est préférentiellement effectué de manière continue, pour améliorer la précision du modèle.

À l'issue de l'apprentissage, le modèle entraîné (ou algorithme d'apprentissage entraîné) est capable de calculer de manière prédictive, à une date D et à un instant T, le temps moyen d'attente dans chaque sous-zone géographique. En d'autres termes, le modèle entraîné calcul, à une date D et dans chaque sous-zone géographique, la variation du temps moyen d'attente, cette variation étant une courbe du type illustré sur la figure 10.

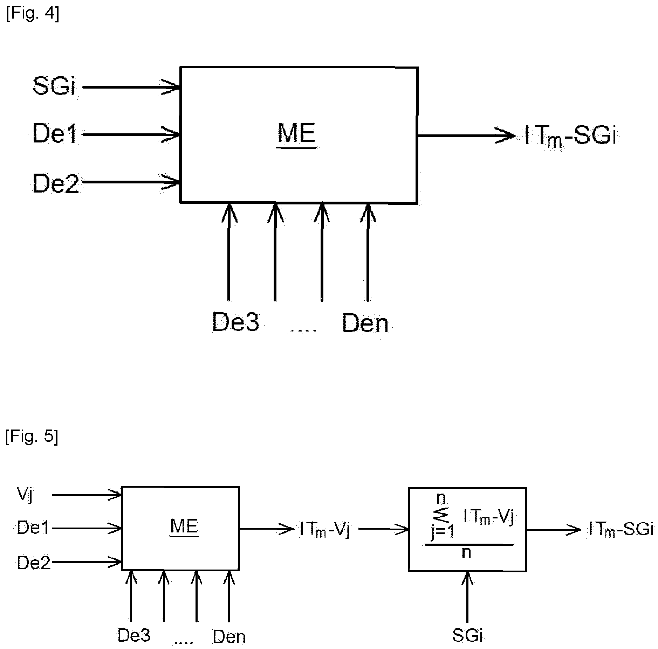

Selon un mode de réalisation illustré par la figure 4, au moment du calcul, les nouvelles données d'entrée De1-Den du modèle entraîné ME sont au moins l'une et préférentiellement l'ensemble des données suivantes : l'identification de la sous-zone concernée SGi ; la localisation des sous-zones depuis lesquelles des requêtes de réservation ont été émises au court des dernières X heures (avec X par exemple compris entre 1 et 168) ; la distance de la sous-zone concernée SGi par rapport à un point prédéfini de la zone G (par exemple le centre-ville) ; les données climatologiques dans la zone G et/ou dans la sous-zone concernée SGi (prévisions à Z heures, avec Z par exemple compris entre 24 et 168) ; des données relatives à l'heure d'évènements intervenus et/ou à intervenir à la date D, dans la zone G et/ou dans la sous-zone concernée SGi et/ou dans les autres sous-zones ; le nombre d'utilisateurs ayant libéré des véhicules de la flotte au court des dernières Y heures (avec Y compris entre 1 et 168) dans la sous-zone concernée. Ces données d'entrée donnent les meilleurs résultats en termes de précision de calcul. La donnée de sortie est le temps moyen d'attente ITm-SGi dans la sous-zone géographique concernée SGi.

Pour améliorer la précision, le calcul du temps moyen d'attente ITm-SGi peut être effectué plusieurs fois par jour. Par exemple, un premier calcul peut être fait entre 0h et 6h, un deuxième calcul entre 15h et 16h, et un troisième calcul entre 19h et 21h. On peut encore déclencher un calcul dès que le statut d'un véhicule passe de « indisponible » à « disponible ». Ces différents calculs permettent de corriger ou valider les calculs précédents. Le calcul du temps moyen d'attente peut toutefois être effectué une seule fois par jour (par exemple entre 0h et 6h), voire une fois par semaine, ou une fois par mois.

### Troisième mode de calcul du temps moyen d'attente

Un troisième mode de calcul est similaire au deuxième mode. Un temps moyen d'attente est toutefois d'abord calculé pour chaque véhicule.

Les données d'entrée d'apprentissage du modèle proviennent de l'historique des requêtes de réservation effectives reçues par le serveur S et archivées dans la base de données B (notamment : date, heure, identification de véhicule réservé), et d'autres données enregistrées dans ladite base.

Les meilleurs résultats en termes de précision de calcul sont obtenus lorsque ces autres données sont : le type et le modèle chaque véhicule de la flotte ; la localisation des véhicules de la flotte au moment de leur réservation ; la distance des véhicules de la flotte au moment de leur réservation par rapport à un point prédéfini de la zone G (par exemple le centre-ville) ; pour chaque véhicule de la flotte, les heures effectives auxquelles leur statut est passé de « disponible » à « indisponible » et inversement ; des données climatologiques (par exemple récupérées depuis des sites publics tels que https://donneespubliques.meteofrance.fr) ; des données relatives à la date et l'heure d'évènements (concerts, matchs de football, ...) intervenus dans la zone G et/ou dans l'une de ses sous-zones ; le nombre d'utilisateurs ayant libéré des véhicules de la flotte au court des dernières Y heures (avec Y par exemple compris entre 1 et 168) dans chaque sous-zone ; etc. Tout ou partie de ces données d'entrées peuvent être utilisés. Les données de sortie d'apprentissage sont les temps d'attente réels des véhicules de la flotte. L'apprentissage du modèle d'intelligence artificielle est effectué préalablement sur le serveur S ou sur un autre serveur. L'apprentissage est préférentiellement effectué de manière continue, pour améliorer la précision du modèle.

À l'issue de l'apprentissage, le modèle entraîné est capable de calculer de manière prédictive, à une date D et à un instant T, le temps moyen d'attente (donnée de sortie) de chaque véhicule Vj : ITm-Vj. En d'autres termes, le modèle entraîné calcul, à une date D et pour chaque véhicule, la variation du temps moyen d'attente, cette variation étant une courbe du type illustré sur la figure 10.

Selon un mode de réalisation illustré par la figure 5, au moment du calcul, les nouvelles données d'entrée De1-Den du modèle entraîné ME (ou algorithme d'apprentissage entraîné) sont au moins l'une et préférentiellement l'ensemble des données suivantes : l'identification du véhicule Vj concerné de la flotte ; la localisation du véhicule concerné au moment du calcul ; pour le véhicule concerné, les heures effectives auxquelles son statut est passé de « disponible » à « indisponible » et inversement au court des dernières X heures (avec X par exemple compris entre 1 et 168) ; la distance séparant le véhicule concerné d'un point prédéfini de la zone G (par exemple le centre-ville) au moment du calcul ; les données climatologiques dans la zone G et/ou dans une sous-zone concernée (prévisions à Z heures, avec Z par exemple compris entre 24 et 168) ;
- des données relatives à l'heure d'évènements intervenus et/ou à intervenir à la date D, dans la zone G et/ou dans les sous-zones ; le nombre d'utilisateurs ayant libéré des véhicules au court des dernières Y heures (avec Y compris entre 1 et 168) dans les différentes sous-zones. Ces données d'entrée donnent les meilleurs résultats en termes de précision de calcul. La donnée de sortie est le temps moyen d'attente ITm-Vj du chaque véhicule concerné Vj.

Pour davantage de précision, le calcul du temps moyen d'attente de chaque véhicule ITm-Vj est préférentiellement effectué plusieurs fois par jour, notamment dès que le statut du véhicule concerné passe à « disponible ». Le calcul du temps moyen d'attente peut toutefois être effectué une seule fois par jour (par exemple entre 0h et 6h), mais les résultats obtenus sont moins précis.

Le temps moyen d'attente ITm-SGi dans une sous-zone SGi est alors calculé en moyennant les temps moyens d'attente des véhicules disponibles à la réservation se trouvant dans ladite sous-zone : ITm-SGi = (ITm-V1 + ITm-V2 + ... + ITm-Vn)/n (avec n le nombre de véhicules ayant un statut « disponible » dans la sous-zone SGi au moment du calcul). Les données de localisation des véhicules permettent de déterminer dans quelle sous-zone ils sont situés.

### Quatrième mode de calcul du temps moyen d'attente

Un quatrième mode de calcul combine le résultat du troisième mode avec le résultat du premier mode ou du deuxième mode. Le résultat obtenu avec le premier ou le deuxième mode est pondéré ou moyenné avec les résultats obtenus avec le troisième mode. Par exemple si le temps moyen d'attente dans la sous-zone SGi calculé selon le premier ou le deuxième mode est ITm1-SGi = 4h et que le temps moyen d'attente dans la sous-zone SGi calculé selon le troisième mode est ITm2-SGi = 3h, alors le temps d'attente calculé selon le quatrième mode peut être IT'm-SGi = (ITm1-SGi + ITm2-SGi)/2 = 3,5h. Et de manière plus générale IT'm-SGi = f(ITm1-SGi, ITm2-SGi), où f est une fonction numérique de deux variables.

Selon un autre mode de réalisation, on cherche à estimer le temps moyen d'attente de chaque véhicule disponible à la réservation. Le résultat obtenu avec le troisième mode est pondéré ou moyenné avec le résultat obtenu avec le premier ou le deuxième mode. Par exemple si le temps moyen d'attente du véhicule Vj calculé selon le troisième mode est ITm-Vj = 2h et que le temps moyen d'attente dans la sous-zone SGi où est localisé ledit véhicule, calculé selon le premier ou le deuxième mode est ITm-SGi = 1h, alors le temps d'attente du véhicule Vj calculé selon le quatrième mode peut être IT'm-Vj = (ITm-Vj + ITm-SGi)/2 = 1,3h. Et de manière plus générale IT'm-Vj = g(ITm-Vj, ITm-SGi), où g est une fonction numérique de deux variables.

### Sélection des véhicules

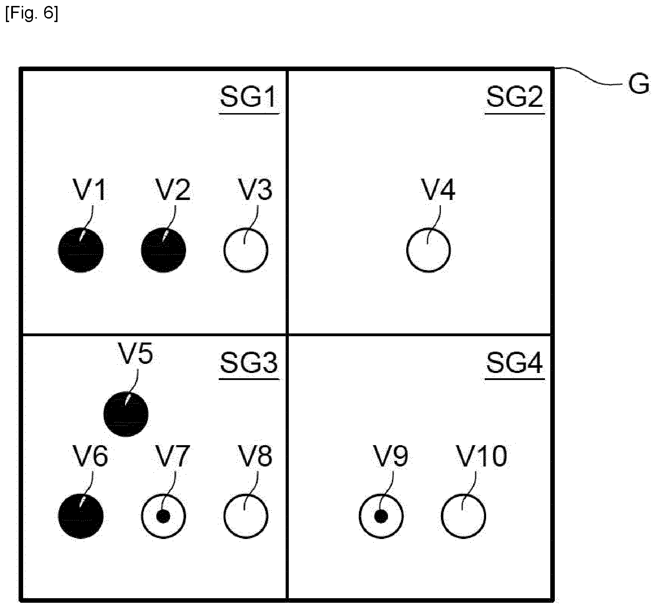

La figure 6 illustre la répartition de véhicules V1-V10 d'une flotte dans des sous-zones géographiques SG1-SG4. À titre d'exemple, les véhicules V1, V2, V5 et V6 ont un statut « nettoyé » et les véhicules V3, V4, V7, V8, V9, V10 ont un statut « non-nettoyé ». Et seuls les véhicules V7 et V9 ont un statut « indisponible », les autres véhicules ayant un statut « disponible ».

La mise en œuvre du processus informatique logique décrit précédemment permet de calculer les temps moyens d'attente ITm dans chaque sous-zone SG1-SG4. A titre d'exemple toujours : ITm-SG1=5h ; ITm-SG2=2h ; ITm-SG3=1h ; ITm-SG4=30min.

On opère une sélection du ou des véhicules disponibles à la réservation (statut « disponible »), en utilisant comme critère de sélection les valeurs calculées des temps moyens d'attente.

En reprenant l'exemple précité, la sous-zone SG4 a le temps moyen d'attente ITm le plus faible (30min). Parmi les deux véhicules V9 et V10 se trouvant dans cette sous-zone SG4, seul le véhicule V10 a un statut « non-nettoyé » et un statut « disponible ». Le véhicule V10 est ainsi sélectionné. Il est à noter que les statuts « nettoyé »/« non-nettoyé » et « disponible »/« indisponibles » sont également utilisés ici comme critères de sélection. Selon un mode de réalisation, c'est le serveur S qui opère cette étape de sélection.

Le ou les véhicules ainsi sélectionnés sont ceux qui ont statistiquement les plus de chances d'être utilisés (c'est-à-dire réservés) rapidement. Les actions de nettoyage vont alors être ciblées en priorité sur ces véhicules sélectionnés de sorte qu'ils soient nettoyés avant leur prochaine réservation. Le serveur va transmettre en priorité des requêtes de nettoyage à ces véhicules sélectionnés, et transmettre ultérieurement ces mêmes requêtes aux autres véhicules devant être nettoyés. On conserve ainsi des chances élevées qu'un utilisateur trouve un véhicule partagé propre au moment de son utilisation (réservation), alors même que le débit numérique nécessaire à la transmission de l'ensemble des requêtes est réduit.

De manière plus générale, certaines caractéristiques permettent de proposer un procédé de sélection de véhicules parmi une pluralité de véhicule appartenant à une flotte de véhicules partagés, ledit procédé comprenant les étapes suivantes :
- mettre en œuvre un processus informatique logique adapté pour calculer, pour chaque véhicule de la flotte disponible à la réservation, un temps moyen d'attente pendant lequel ledit véhicule ne sera pas réservé,
- baser la sélection de véhicules sur les valeurs calculées des temps moyens d'attente.

### Premier mode de nettoyage des véhicules sélectionnés.

L'action de nettoyage consiste à déclencher un moyen de nettoyage équipant chaque véhicule sélectionné V10.

Sur la figure 8, le moyen de nettoyage 14 se présente sous la forme d'un générateur d'aérosol de désinfectant virucide et/ou bactéricide, par exemple une composition dont la teneur en alcool est supérieure à 60 %. Ce générateur 14 est installé dans l'habitacle de chaque véhicule Vj de la flotte, par exemple au niveau du plafonnier, de sorte que l'aérosol soit dispersé de manière homogène dans ledit habitacle. Le générateur 14 comporte de manière classique : un réservoir contenant la composition à aerosoliser, une ou plusieurs pompes ou micro-pompes et une ou plusieurs buses d'aérosolisation 140 disposées dans l'habitacle.

Dans le cas où le véhicule Vj n'est pas une voiture ou un camion présentant un habitacle (par exemple un deux-roues, un vélo, une trottinette, ...), le générateur d'aérosol 14 peut être intégré dans un châssis dudit véhicule et les buses orientées vers un guidon, une selle, ou toute autre partie susceptible d'être en contact avec un utilisateur et devant d'être nettoyée.

Sur la figure 9, le moyen de nettoyage 15 se présente sous la forme d'une ou plusieurs lampes à ultraviolets installées dans l'habitacle de chaque véhicule Vj de la flotte. Les lampes à UV utilisées sont préférentiellement des lampes émettant un rayonnement UV-C (longueur d'onde comprise entre 280 et 100 nm). La ou les lampes 15 sont installées dans l'habitacle de chaque véhicule Vj, par exemple au niveau du plafonnier, de sorte que les rayonnements UV puissent être diffusés de manière homogène dans ledit habitacle.

Selon un mode de réalisation, lorsque le serveur S a opéré la sélection d'un véhicule Vj à nettoyer, il génère une requête entraînant le déclenchement du moyen de nettoyage 14, 15. Cette requête est transmise à l'équipement embarqué EQVej du véhicule Vj au travers du réseau R. Seul(s) le(s) véhicule(s) sélectionné(s) reçoi(ven)t cette requête. À réception de cette requête, l'équipement embarqué EQVej déclenche le moyen de nettoyage 14, 15. Le moyen de nettoyage 14, 15 reste avantageusement activé pendant une durée prédéterminée, par exemple comprise entre 10 secondes et 5 minutes.

### Deuxième mode de nettoyage des véhicules sélectionnés.

L'action de nettoyage est ici réalisée par un opérateur. Lorsque le serveur S a opéré la sélection d'un véhicule Vj à nettoyer, il génère une requête de nettoyage et la transmet à un terminal mobile d'un opérateur pour qu'il aille nettoyer en priorité le véhicule. Cette requête de nettoyage se matérialise par exemple sous la forme d'un mail ou d'un SMS, indiquant à l'opérateur de se rendre jusqu'à la position géographique où est stationné le véhicule Vj. La requête comprend également l'identifiant du véhicule Vj, préférentiellement accompagné d'une description dudit véhicule (plaque d'immatriculation, modèle, couleur, etc).

### Déplacement de véhicules.

Dans le premier et le deuxième mode de nettoyage, les actions de nettoyage sont exécutées pour le ou les véhicules V10 ayant un statut « non-nettoyé », qui sont disponibles à la réservation et qui sont géolocalisés dans la sous-zone géographique SG4 où le temps moyen d'attente ITm-SG4 calculé est le plus faible.

Une solution alternative ou complémentaire consiste à déplacer des véhicules ayant un statut « nettoyé » dans les sous-zones géographiques où les temps moyens d'attente calculés sont les plus faibles. Pour ce faire, on opère une sélection d'un ou plusieurs véhicules ayant un statut « nettoyé », qui sont disponibles à la réservation et qui sont géolocalisés dans une ou plusieurs sous-zones géographiques où le temps moyen d'attente calculé est supérieur au temps moyen d'attente calculé le plus faible. Ces véhicules sont alors déplacés vers la sous-zone géographique où le temps moyen d'attente calculé est le plus faible. En d'autres termes, les véhicules « nettoyés » qui ont statistiquement le moins de chance d'être utilisés, sont déplacés vers la sous-zone géographique où ils auront statistiquement le plus de chance d'être utilisés rapidement. Selon un mode de réalisation, la sélection des véhicules à déplacer est opérée par le serveur S.

Le ou les véhicules ainsi sélectionnés sont ceux qui ont statistiquement les moins de chances d'être utilisés (c'est-à-dire réservés). Les actions à exécuter (ici le déplacement) vont alors être ciblées en priorité sur ces véhicules sélectionnés.

En reprenant l'exemple de la figure 6, les véhicules V1, V2, V5 et V6 ont un statut « nettoyé » et un statut « disponible ». Et les temps moyens d'attente calculés dans chaque sous-zone SG1-SG4 sont : ITm-SG1=5h ; ITm-SG2=2h ; ITm-SG3=1h ; ITm-SG4=30min. La sous-zone SG4 a le temps moyen d'attente ITm-SG4 le plus faible (30min). Les véhicules V1, V2, V5 et V6 se trouvant dans des sous-zones où le temps moyen d'attente est supérieur à 30 minutes, ils vont pouvoir être sélectionnés pour être déplacés vers la sous-zone SG4.

Selon un mode de réalisation, les véhicules qui sont déplacés en priorité sont ceux situés dans les sous-zones dont le temps moyen d'attente calculé est le plus élevé. En reprenant l'exemple précité, la sous-zone SG5 ayant le temps moyen d'attente ITm-SG5 le plus élevé (5h), les véhicules V1, V2 seront déplacés en priorité vers la sous-zone SG4.

Selon un autre mode de réalisation, les véhicules qui sont déplacés en priorité sont ceux qui sont le plus proches de la sous-zone où le temps moyen d'attente calculé est le plus faible. La distance séparant un véhicule de la sous-zone concernée peut notamment être déterminée à partir de la position géographique dudit véhicule et de la position géographique de ladite sous-zone, préférentiellement de la position géographique d'un point prédéfini de ladite sous-zone (par exemple son centre). Par exemple, si le véhicule V5 est le plus proche de la sous-zone SG4, alors ce véhicule sera déplacé en priorité.

Si les véhicules V1, V2, V5 sont des véhicules autonomes, le serveur S transmet à leur équipement respectif EQVe1, EQVe2, EQVe5, une requête qui initie leur déplacement vers la sous-zone SG4, selon un itinéraire calculé par le module de calcul d'itinéraire 34 dudit serveur. Ces requêtes ne sont transmises qu'au(x) véhicule(s) sélectionné(s). Si les véhicules V1, V2, V5 ne sont pas des véhicules autonomes, le serveur S transmet une requête de déplacement, se matérialisant par exemple sous la forme d'un mail ou d'un SMS, indiquant à un ou plusieurs opérateurs de se rendre en priorité jusqu'aux positions géographiques où sont stationnés les véhicules V1, V2, V5 et de les déplacer vers la sous-zone SG4, selon un itinéraire calculé par le module de calcul d'itinéraire 34. La requête comprend également l'identifiant des véhicules V1, V2, V5, préférentiellement accompagné d'une description desdits véhicules (plaque d'immatriculation, modèle, couleur, etc).

Selon un mode particulier de réalisation, la notion de coût financier permet d'arbitrer entre le nettoyage de véhicules (selon le premier et/ou le second mode de nettoyage) et le déplacement de véhicules. Le serveur S peut notamment affecter un coût aux opérations de nettoyage et un coût aux opérations de déplacement de véhicules. Par exemple : le coût d'un nettoyage selon le premier mode (déclenchement d'un moyen de nettoyage embarqué dans le véhicule) ou selon le deuxième mode (nettoyage réalisé par un opérateur) est fixée à « Cn » € (ex : Cn=1 €) ; et le coût du déplacement d'un véhicule est de « Cp » €. Cette valeur Cp est variable et dépend notamment de la distance D que le véhicule doit parcourir pour atteindre la sous-zone concernée et/ou du temps de trajet T.

La distance D et/ou le temps de trajet T peuvent notamment être calculés par le module de calcul d'itinéraire 34 du serveur S qui élabore l'itinéraire le plus rapide et/ou le plus court entre le point de stationnement initial du véhicule concerné et un point d'arrivée dans la sous-zone concernée, en prenant préférentiellement en compte le trafic routier. Selon un mode de réalisation, Cp est fonction des valeurs D et Tp calculées et de la valeur Cn : Cp=f(D, Tp, Cn). Par exemple Cp=(Tp*Cn)/D, où Tp est exprimé en minutes et D en kilomètres.

Prenons le cas où le serveur S a le choix entre nettoyer le véhicule V10 ou faire déplacer le véhicule V5 vers la sous-zone SG4. Le coût Cn du nettoyage du véhicule V10 est Cn=1€.

Selon un premier exemple, le module de calcul d'itinéraire 34 calcul que la distance séparant le véhicule V5 de la sous-zone SG4 est D=10 kilomètres et que le temps de trajet est Tp=60 minutes compte tenu d'un trafic routier particulièrement dense sur l'itinéraire. En posant Cp=(Tp*Cn)/D, on obtient Cp=6€. Le coût Cp de déplacement du véhicule V5 est ici supérieur au coût de nettoyage du véhicule V10. Dans ce cas, le serveur S va déclencher en priorité le nettoyage du véhicule V10.

Selon un deuxième exemple, le module de calcul d'itinéraire 34 calcul que la distance séparant le véhicule V5 de la sous-zone SG4 est D=10 kilomètres et que le temps de trajet est Tp=5 minutes compte tenu d'un trafic routier particulièrement fluide sur l'itinéraire. En posant Cp=(Tp*Cn)/D, on obtient Cp=0,5€. Le coût Cp de déplacement du véhicule V5 est ici inférieur au coût de nettoyage du véhicule V10. Dans ce cas, le serveur S va choisir de déplacer en priorité le véhicule V5.

### Actions alternatives ou complémentaires au nettoyage des véhicules sélectionnés

Les requêtes peuvent entraîner l'exécution d'autres actions que le nettoyage, en particulier la charge de batteries de véhicules ou le remplissage de réservoirs de véhicules. Les différentes étapes décrites précédemment en référence au nettoyage peuvent alors être mises en œuvre pour ces autres actions.

Par exemple, en fonction des informations qu'il reçoit, le serveur S peut affecter les statuts suivants aux véhicules Vj :
- statut dit « rechargé » : le niveau de batterie ou de carburant du véhicule est supérieur ou égal à une valeur seuil prédéterminée.
- statut dit « non-rechargé » : le niveau de batterie ou de carburant du véhicule est inférieur à la valeur seuil prédéterminée,
- statut dit « révisé » : le véhicule a été révisé (par exemple révision de contrôle) dans une période inférieure à une valeur prédéterminée (par exemple 3 mois).
- statut dit « non-révisé » : le véhicule n'a pas été révisé dans une période supérieure à la valeur prédéterminée.
- etc.

La sélection des véhicules à recharger ou à réviser est identique à celle décrite précédemment, notamment en référence à la figure 6.

Par exemple, les véhicules V1, V2, V5 et V6 ont un statut « rechargé » et les véhicules V3, V4, V7, V8, V9, V10 ont un statut « non-rechargé ». Les véhicules V7 et V9 ont un statut « indisponible », les autres véhicules ayant un statut « disponible ». Les temps moyens d'attente calculé ITm dans chaque sous-zone SG1-SG4, sont : ITm-SG1=5h ; ITm-SG2=2h ; ITm-SG3=1h ; ITm-SG4=30min. La sous-zone SG4 a le temps moyen d'attente ITm le plus faible (30min). Parmi les deux véhicules V9 et V10 se trouvant dans cette sous-zone SG4, seul le véhicule V10 a un statut « non-rechargé » et un statut « disponible ». Le véhicule V10 est ainsi sélectionné. Le serveur va transmettre en priorité à ce véhicule V10 une requête entraînant la recharge de sa batterie. Les requêtes de recharge des véhicules V3 et V4 sont transmises ultérieurement. On maintient ainsi une mise en état opérationnel optimale des véhicules au moment de leur utilisation (le véhicule V10 étant celui qui a le plus de chances d'être réservé, il sera rechargé en priorité) tout en réduisant le débit numérique nécessaire à la transmission des requêtes à l'ensemble des véhicules devant être rechargés.

Si le véhicule V10 est un véhicule autonome, le serveur S transmet à son équipement EQVe10, une requête de recharge qui initie son déplacement vers une station de recharge (par exemple une station essence ou des bornes de recharges électriques), selon un itinéraire calculé par le module de calcul d'itinéraire 34 dudit serveur. Si le véhicule V10 n'est pas un véhicule autonome, le serveur S transmet une requête de recharge, se matérialisant par exemple sous la forme d'un mail ou d'un SMS, indiquant à un ou plusieurs opérateurs de se rendre en priorité jusqu'à la position géographique où est stationné le véhicule V10. L'opérateur pourra alors soit recharger sur place le véhicule V10, par exemple en remplaçant sa batterie, soit le déplacer vers une station ou borne de recharge. Une telle requête comprend avantageusement l'identifiant du véhicule V10, préférentiellement accompagné d'une description dudit véhicule (plaque d'immatriculation, modèle, couleur, etc).

Le serveur S peut également commander le déplacement des véhicules ayant un statut « rechargé » dans les sous-zones géographiques où les temps moyens d'attente calculés sont les plus faibles. Le serveur S opère alors une sélection d'un ou plusieurs véhicules ayant un statut « rechargé », qui sont disponibles à la réservation et qui sont géolocalisés dans une ou plusieurs sous-zones géographiques où le temps moyen d'attente calculé est supérieur au temps moyen d'attente calculé le plus faible. En reprenant l'exemple ci-dessus, les véhicules V1, V2, V5 et V6 ont un statut « rechargé » et un statut « disponible », et sont localisés dans des sous-zones où le temps moyen d'attente est supérieur à 30 minutes. Ils pourront alors être sélectionnés pour être déplacés vers la sous-zone SG4. On maintient ainsi une mise en état opérationnel optimale des véhicules au moment de leur utilisation (en augmentant le nombre de véhicules opérationnels dans la sous-zone SG4) tout en réduisant le nombre de requêtes émises par le serveur S.

Si les véhicules V1, V2, V5 et V6 sont des véhicules autonomes, le serveur S transmet à leur équipement EQVe1, EQVe2, EQVe5 et EQVe6 respectif, une requête de recharge qui initie leur déplacement vers la sous-zone SG4, selon un itinéraire calculé par le module de calcul d'itinéraire 34 dudit serveur. Si les véhicules V1, V2, V5 et V6 ne sont pas des véhicules autonomes, le serveur S transmet une requête de déplacement, se matérialisant par exemple sous la forme d'un mail ou d'un SMS, indiquant à un ou plusieurs opérateurs de se rendre en priorité jusqu'aux positions géographiques où sont stationnés les véhicules V1, V2, V5 et V6 et de les déplacer dans la sous-zone SG4, selon un itinéraire calculé par le module de calcul d'itinéraire 34. La requête comprend également l'identifiant des véhicules V1, V2, V5 et V6, préférentiellement accompagné d'une description desdits véhicules (plaque d'immatriculation, modèle, couleur, etc).

Selon un autre exemple illustratif, chacun des véhicules V3, V4 et V10 précités (en référence à la figure 6) est connecté à une borne de recharge connectée au réseau électrique. La batterie d'un véhicule est rechargée lorsque la borne correspondante est activée. Cette activation est déclenchée par la réception, par ladite borne, d'une requête transmise par le serveur S. Celui-ci va transmettre en priorité (à l'instant T) une requête à la borne à laquelle est connectée le véhicule V10 sélectionné pour que sa batterie soit rechargée en priorité. Les autres requêtes destinées aux bornes des autres véhicules V3 et V4 sont transmises ultérieurement, de manière échelonnée dans le temps. Par exemple d'abord la borne du véhicule V4 situé dans la zone SG2 où ITm-SG2=2h (à l'instant T+1 heure par exemple) puis la borne du véhicule V3 situé dans la zone SG1 où ITm-SG1=5h (à l'instant T+3 heures par exemple). Sans la prise en compte des temps moyens d'attente, les trois bornes connectées aux véhicules V3, V4 et V10 seront activées simultanément par le serveur S. L'énergie électrique consommée simultanément par l'ensemble de ces bornes peut alors être relativement importante, et provoquer une pointe de consommation électrique sur le réseau électrique. Grâce à la prise en compte des temps moyens d'attente, les bornes sont activées de manière échelonnée dans le temps de sorte que les pointes de consommation d'énergie électrique sont atténuées. La prise en compte des temps moyens d'attente contribue ainsi à un meilleur équilibrage des conditions énergétiques parfois fluctuantes du réseau électrique.

Selon un autre exemple, les véhicules V1, V2, V5 et V6 ont un statut « révisé » et les véhicules V3, V4, V7, V8, V9, V10 ont un statut « non-révisé ». La révision d'un véhicule nécessite de l'immobiliser pendant environ 2 heures, ce temps d'intervention étant préparamétré et connu du serveur S. Les véhicules V7 et V9 ont un statut « indisponible », les autres véhicules ayant un statut « disponible ». Pour maintenir une mise en état opérationnelle optimale des véhicules partagés au moment de leur utilisation tout en limitant le nombre de requêtes d'intervention à transmettre, les véhicules localisés dans les sous-zones où les temps moyens d'attente sont supérieurs ou égaux au temps d'intervention pour la révision, vont être sélectionnés en priorité. Les temps moyens d'attente calculés ITm dans chaque sous-zone SG1-SG4, sont : ITm-SG1=5h ; ITm-SG2=2h ; ITm-SG3=1h ; ITm-SG4=30min. Les sous-zones SG1 et SG2 ont un temps moyen d'attente ITm (respectivement 5h et 2h) supérieur ou égal au temps d'intervention (2h). Parmi les véhicules V1, V2, V3 et V4 se trouvant dans cette sous-zone SG4, seuls les véhicules V3 et V4 ont un statut « non-révisé » et un statut « disponible ». Ces véhicules V3 et V4 sont alors sélectionnés.

Si les véhicules V3 et V4 sont des véhicules autonomes, le serveur S transmet leur équipement EQVe3, EQVe4 respectif, une requête d'intervention qui initie leur déplacement vers une station de révision (par exemple un garage), selon un itinéraire calculé par le module de calcul d'itinéraire 34 dudit serveur. Si les véhicules V3, V4 ne sont pas des véhicules autonomes, le serveur S transmet une requête de révision, se matérialisant par exemple sous la forme d'un mail ou d'un SMS, indiquant à un ou plusieurs opérateurs de se rendre en priorité jusqu'aux positions géographiques où sont stationnés les véhicules V3, V4. L'opérateur pourra alors soit réviser sur place les véhicules V3, V4, soit les déplacer vers une station de révision. Une telle requête comprend avantageusement l'identifiant des véhicules V3, V4, préférentiellement accompagné d'une description desdits véhicules (plaque d'immatriculation, modèle, couleur, etc).

### Autre(s) avantage(s) lié(s) à l'invention

Comme mentionné dans la partie introductive de la présente description, les équipements informatiques EQVej embarqués dans les véhicules Vj sont généralement mis en veille temporairement lorsque lesdits véhicules ne sont pas utilisés, c'est-à-dire lorsque leur statut passe de « indisponible » à « disponible à la réservation ». Lorsqu'une action doit être exécutée sur un véhicule, il est généralement nécessaire de réveiller son équipement électronique embarqué. Le réveil de l'équipement EQVej peut être réalisé automatiquement en préparamétrant la durée de sa mise en veille et/ou sa fréquence de réactivation et/ou sa durée de réveil. Ce réveil peut se faire automatiquement à une fréquence prédéterminée ou préparamétrée dans l'équipement EQVej. Le réveil peut également être réalisé par l'envoi automatique d'une commande d'activation, par exemple de type SMS, par le serveur S à destination de l'équipement EQVej. La réception de cette commande entraîne le réveil de l'équipement EQVej et sa connexion automatique au serveur S. Le réveil d'un équipement EQVej consomme les ressources électriques de la batterie Bat à laquelle il est connecté et l'envoi de multiples commandes d'activation de type SMS par le serveur S peut être relativement onéreux. Il apparait donc avantageux de limiter le nombre de réveils d'un équipement EQVej pour optimiser les ressources électriques de sa batterie Bat et/ou pour réduire les coûts liés à l'envoi de SMS ou d'autres commandes équivalentes.

L'utilisation du temps moyen d'attente comme moyen de réglage du fonctionnement d'un équipement EQVej permet d'atteindre tout ou partie de ces objectifs. L'invention permet de modifier la durée de mise en veille et/ou la fréquence de réactivation et/ou la durée de réveil d'un équipement EQVej en fonction du temps moyen d'attente calculé dans la sous-zone géographique où est localisé le véhicule concerné, afin de réduire la consommation de la batterie Bat.

Les équipements de véhicules situés dans des sous-zones affectées d'un temps moyen d'attente élevé n'ont pas besoin d'être réveillés aussi fréquemment que ceux des véhicules situés dans des sous-zones affectées d'un temps moyen d'attente faible. Ainsi, les requêtes pour exécuter des actions sur les véhicules situés dans des sous-zones ayant un temps moyen d'attente élevé seront transmises ultérieurement et/ou pourront être regroupées de manière à réduire leur nombre de réveils durant leur période de disponibilité. Selon un mode de réalisation, le serveur S transmet aux équipements de ces véhicules une requête adaptée pour modifier leurs paramètres de fonctionnement de manière à réduire la consommation de leur batterie. Par exemple, le serveur S peut leur transmettre une requête entraînant leur mise en veille automatique dès que leur statut passe de « indisponible » à « disponible » dans la sous-zone et/ou une requête adaptée pour allonger la durée de leur mise en veille et/ou réduire leur fréquence de réveil et/ou réduire leur durée de réveil. Selon un mode de réalisation, la nouvelle durée de mise en veille est fonction du temps moyen d'attente calculé, par exemple comprise entre 50% et 100% dudit temps moyen d'attente. De même, la fréquence de réveil est avantageusement fonction du temps moyen d'attente calculé et préférentiellement inversement proportionnel audit temps moyen d'attente : plus ce dernier est élevé, plus la fréquence de réveil sera faible. La durée de réveil (c'est-à-dire la durée entre deux mises en veille) peut également être fonction du temps moyen d'attente calculé et préférentiellement inversement proportionnel audit temps moyen d'attente : plus ce dernier est élevé, plus la durée de réveil sera faible.

En reprenant l'exemple de la figure 6 à titre illustratif, les véhicules V3, V4, V7, V8, V9, V10 ont un statut « non-rechargé » et un statut « non-nettoyé », seuls les véhicules V7 et V9 ayant un statut « indisponible », les autres véhicules ayant un statut « disponible ». Les véhicules V3, V4, V8 et V10 doivent donc être rechargés et nettoyés. Et les temps moyens d'attente calculés dans chaque sous-zone SG1-SG4 sont : ITm-SG1=5h ; ITm-SG2=2h ; ITm-SG3=1h ; ITm-SG4=30min. Les actions de nettoyage et de recharge à réaliser sur le véhicule V10 sont exécutées selon le procédé décrit précédemment.

Le véhicule V3 se trouve dans la sous-zone où le temps moyen d'attente est le plus important, respectivement 5h. Avantageusement, dès que le véhicule V3, localisé dans la sous-zone SG1 a son statut qui passe à « disponible », le serveur S génère et transmet à l'équipement EQVe3 une requête pour allonger sa durée de mise en veille, par exemple pour la passer de 30 minutes (valeur préparamétrée par défaut) à 3h, et/ou pour réduire sa durée de réveil par exemple pour la passer de 10 minutes (valeur préparamétrée par défaut) à 5 minutes. En complément ou en alternative de ce nouveau paramétrage de l'équipement EQVe3, le serveur S peut lui transmettre une requête pour qu'il se mette immédiatement en veille.

Le serveur S regroupe la requête entraînant la recharge de la batterie et la requête entraînant le nettoyage du véhicule V3 de manière à les envoyer en même temps. Le serveur S peut bien évidemment regrouper plus de deux requêtes. Selon un mode de réalisation, ces différentes requêtes sont transmises simultanément à l'équipement EQVe3, préférentiellement pendant la phase de réveil dudit équipement. L'équipement EQVe3 n'a donc besoin d'être réveillé qu'une seule fois pour recevoir ces différentes requêtes de sorte que les ressources électriques de sa batterie sont optimisées. Il est rappelé que ce réveil peut être automatique suite notamment au nouveau paramétrage de la durée de mise en veille et/ou de la fréquence de réveil. Ce réveil peut également être initié par le serveur S, par l'envoi d'une commande d'activation de type SMS. Dans ce cas, dans la mesure où un seul réveil (et donc l'envoi d'une seule commande d'activation) est nécessaire pour la transmission des différentes requêtes, les coûts liés à l'envoi de SMS ou d'autres commandes équivalentes sont fortement réduits.

Lorsque la recharge et/ou le nettoyage du véhicule V3 requièrent l'intervention d'un opérateur, les requêtes de recharge et de nettoyage sont transmises au terminal mobile dudit opérateur comme décrit précédemment. L'équipement EQVe3 n'est réveillé qu'à l'arrivée de l'opérateur. Selon un mode de réalisation, ce réveil est initié par le serveur S par l'envoi d'une commande d'activation de type SMS, lorsque ledit serveur constate une proximité (par exemple une distance inférieure ou égale à 100 mètres) entre le terminal opérateur et le véhicule V3. Selon un autre mode de réalisation, c'est le terminal opérateur qui initie le réveil de l'équipement EQVe3 lorsqu'il est à proximité du véhicule V3. Le terminal mobile peut alors transmettre à l'équipement EQVe3 une commande d'activation de type SMS pour le réveiller. L'équipement EQVe3 n'est donc réveillé qu'une seule fois pour exécuter les actions de recharge et de nettoyage.

Selon un mode de réalisation, si à la fin du temps moyen d'attente calculé (c'est-à-dire à l'issue des 5h), aucune action n'a été exécutée sur le véhicule V3 (c-à-d si aucune requête n'a été transmise audit véhicule) ou si ledit véhicule n'a pas été réservé, alors le serveur S génère et transmet à l'équipement EQVe3 une requête pour modifier à nouveau ses paramètres de mise en veille et/ou fréquence de réactivation et/ou durée de réveil. Cette requête peut notamment réduire sa durée de mise en veille, par exemple pour la passer de 3h à 10 minutes ou moins, et/ou pour augmenter sa durée de réveil par exemple pour la passer de 5 minutes à 10 minutes ou plus. Ainsi, un utilisateur pourra directement interagir avec le véhicule V3 lorsqu'il l'utilisera.

Un processus similaire est mis en œuvre pour les véhicules V4 et V8. Notamment, le serveur S génère et transmet à leur équipement respectif une requête pour allonger leur durée de mise en veille et/ou pour réduire leur durée de réveil, ces durées dépendant du temps moyen d'attente calculé dans les sous-zones concernées par ces véhicules.

Selon un mode de réalisation, le calcul des temps moyens d'attente et les étapes qui en découlent (sélection de véhicules, priorisation de transmission des requêtes aux véhicules sélectionnés, ...) ne sont pas exécutés de manière systématique. En particulier, le serveur S peut évaluer, sur une période temporelle définie, par exemple 5 min, 30min, 1h, 24h, ..., le nombre total d'actions à exécuter sur l'ensemble des véhicules de la flotte localisés dans la zone géographique G. L'ensemble de ces actions correspondant à un ensemble de requêtes à transmettre par le serveur S. Par exemple, le serveur S détermine qu'il y a 5000 actions à exécuter en 5 minutes sur l'ensemble des véhicules de la flotte. Le serveur S doit donc générer et transmettre 1000 requêtes par minute, ce qui correspond au débit numérique calculé nécessaire à la transmission de l'ensemble de requêtes dans le réseau de données pendant la période temporelle de 5 minutes. Le serveur S a en mémoire une valeur seuil du débit acceptable. Si le débit calculé est supérieur à cette valeur seuil, alors le serveur S met en oeuvre les étapes de calcul des temps moyens d'attente et les étapes du procédé qui en découlent (notamment les étapes de sélection de véhicules et de transmission de requêtes prioritaires). Dans le cas contraire, le serveur S transmet normalement l'ensemble des requêtes aux véhicules.

Selon un premier exemple, la valeur seuil de débit est de 500 requêtes par minutes. Le serveur S calcule qu'il doit transmettre 1000 requêtes par minutes. Dans ce cas, le serveur S met en œuvre les étapes de calcul du temps moyen d'attente et les étapes qui en découlent. Selon un deuxième exemple, la valeur seuil de débit est de 1000 requêtes par minutes. Le serveur S calcule qu'il doit transmettre 500 requêtes par minutes. Dans ce cas, le serveur S transmet directement ces 500 requêtes aux véhicules sans mettre en œuvre l'étape de calcul du temps moyen d'attente et les étapes qui en découlent.

### Priorisation d'actions à exécuter par des opérateurs

Comme indiqué précédemment, des opérateurs peuvent être amenés à intervenir sur des véhicules de la flotte pour exécuter des actions telles que : nettoyage, recharge (de batteries électriques et/ou remplissage de réservoir), révision, déplacement, etc.

Selon un mode de réalisation, le serveur S attribue à chaque opérateur des tickets d'intervention (correspondant aux requêtes précitées), chaque ticket correspondant à une action à exécuter et s'apparente aux requêtes de nettoyage ou de recharge décrites précédemment. Le temps moyen d'attente calculé est utilisé pour prioriser les tickets affectés à un opérateur.

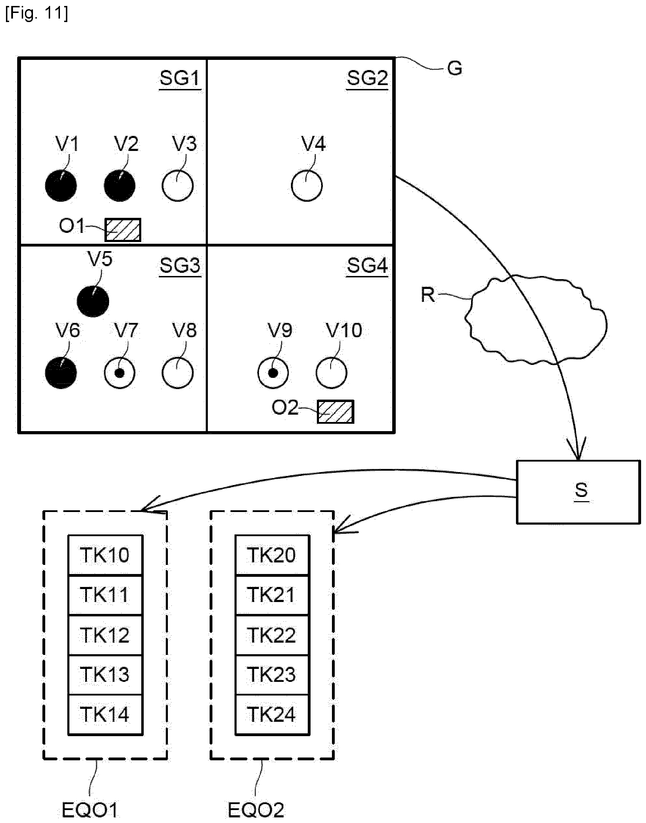

La figure 11 illustre la même répartition de véhicules V1-V10 que la figure 6 et avec les mêmes temps moyens d'attente dans les différentes sous-zones (ITm-SG1=5h ; ITm-SG2=2h ; ITm-SG3=1h ; ITm-SG4=30min). Deux opérateurs référencés O1 et O2 sont localisés respectivement dans la sous-zone SG1 et dans la sous-zone SG4.

Le serveur S attribue à chaque opérateur O1, O2 une liste de tickets d'intervention respectivement TK10-TK14 et TK20-TK24, classés par ordre de priorité. Par exemple, pour l'opérateur O1, le ticket TK10 doit être exécuté en priorité. Selon un mode de réalisation, ces listes de tickets s'affichent sur une interface graphique des terminaux mobiles EQO1, EQO2 des opérateurs O1, O2.

Selon un mode de réalisation, le classement des tickets, et donc des actions à réaliser, est déterminé par un processus informatique logique mis en oeuvre dans le serveur S. Les données d'entrée sont : le temps moyen d'attente calculé dans chaque sous-zone et/ou affecté aux véhicules ; le(s) statut(s) des véhicules (« disponible »/« indisponibles » et/ou « nettoyé »/« non-nettoyé » et/ou « rechargé »/ »non-rechargé » et/ou « révisé/non-révisé » ...) ; l'état des capteurs embarqués dans les véhicules ; la position des véhicules ; la position des opérateurs ; un coût financier associé à chaque action à réaliser. Tout ou partie de ces données d'entrée peuvent être utilisés, préférentiellement toutes lesdites données. Les données de sorties sont des listes de tickets classés selon leur priorité et leur attribution aux opérateurs.

Les données d'entrée sont avantageusement pondérées en fonction de leur nature. Par exemple, le temps moyen d'attente peut avoir un poids plus important que le coût financier. De même, les données fournies par les capteurs embarqués dans les véhicules peuvent avoir un poids plus important que le temps moyen d'attente, notamment si un des capteurs indique que le véhicule est accidenté ou défaillant.

En reprenant l'exemple de la figure 11, à un instant T, le serveur S définit que les actions suivantes doivent être effectuées :
- action #1 : déplacer le véhicule V1 de la sous-zone SG1 vers la sous-zone SG4.
- action #2 : déplacer le véhicule V2 de la sous-zone SG1 vers la sous-zone SG4.
- action #3 : recharger le véhicule V3.
- action #4 : réviser le véhicule V4.
- action #5 : déplacer le véhicule V5 de la sous-zone SG3 vers la sous-zone SG4.
- action #6 : déplacer le véhicule V6 de la sous-zone SG3 vers la sous-zone SG4.
- action #7 : intervenir sur le véhicule V7 (panne détectée).
- action #8 : recharger le véhicule V8.
- action #9 : intervenir sur le véhicule V9 (panne détectée).
- action #10 : nettoyer le véhicule V10.

Les véhicules V7 et V9 étant défaillants, cet état desdits véhicules bénéficie de la plus forte pondération. Une intervention sur ces véhicules est alors priorisée. Le serveur S détermine que l'opérateur O1 est le plus proche du véhicule V7 et que l'opérateur O2 est le plus proche du véhicule V9. Le ticket TK10 affecté à l'opérateur O1 et qui doit être exécuté en priorité correspond donc à l'action #7. Et le Ticket TK20 devant être exécuté en priorité par l'opérateur O2 correspond à l'action #9.

Le serveur S détermine que lorsque l'opérateur O1 se retrouvera dans la sous-zone SG3 après être intervenu sur le véhicule V7, l'opération suivant la plus rentable consistera à recharger le véhicule V8, notamment en remplaçant sa batterie. Le deuxième ticket TK11 par ordre de priorité correspond donc à l'action #8. De même, le serveur S détermine que lorsque l'opérateur O2 est dans la sous-zone SG4 après être intervenu sur le véhicule V9, l'opération suivante la plus rentable consistera à nettoyer le véhicule V10. Le deuxième ticket TK21 par ordre de priorité correspond donc à l'action #10.

Le serveur S détermine ensuite qu'à l'issue de la recharge du véhicule V8, l'opérateur O1 se trouvant toujours dans la sous-zone G3, il pourra déplacer le véhicule V5 vers la sous-zone SG4. Le troisième ticket TK12 par ordre de priorité correspond donc à l'action #5.

Le serveur S peut également déterminer qu'après avoir nettoyé le véhicule V10, l'opérateur O2 devra se rendre dans la sous-zone SG1 pour déplacer le véhicule V1 vers la sous-zone SG4. Le troisième ticket TK22 par ordre de priorité correspond donc à l'action #1.

L'opérateur O1 se trouvant dans la sous-zone SG4 après avoir traité le ticket TK12, le serveur S détermine qu'il devra ensuite se rendre dans la sous-zone SG1 pour déplacer le véhicule V2 vers la sous-zone SG4. Le quatrième ticket TK13 par ordre de priorité correspond donc à l'action #2.

L'opérateur O2 se trouvant dans la sous-zone SG4 après avoir traité le ticket TK22, le serveur S détermine qu'il devra ensuite se rendre dans la sous-zone SG1 pour recharger le véhicule V3. Le quatrième ticket TK23 par ordre de priorité correspond donc à l'action #3.

L'opérateur O1 se trouvant dans la sous-zone SG4 après avoir traité le ticket TK13, le serveur S détermine qu'il devra ensuite se rendre dans la sous-zone SG3 pour déplacer le véhicule V6 vers la sous-zone SG4. Le cinquième ticket TK14 par ordre de priorité correspond donc à l'action #5.

L'opérateur O2 se trouvant dans la sous-zone SG3 après avoir traité le ticket TK23, le serveur S détermine qu'il devra ensuite se rendre dans la sous-zone SG2 pour réviser le véhicule V4. Le cinquième ticket TK24 par ordre de priorité correspond donc à l'action #4.

Selon un mode de réalisation, les tickets sont gérés de manière dynamique par le serveur S de façon à s'adapter aux circonstances. Notamment, le serveur S réévalue la nature et l'affectation des tickets aux opérateurs O1, O2 (c'est-à-dire les actions qu'ils doivent exécuter par ordre de priorité) dès qu'une action est terminée. À cet effet, les opérateurs O1, O2 peuvent être amenés à indiquer au serveur S qu'une action est achevée et/ou qu'ils traitent un ticket par l'activation d'une touche dédiée sur leur terminal EQO1, EQO2.

Par exemple, l'intervention sur le véhicule V7 peut être particulièrement longue et ne pas être encore achevée lorsque l'opérateur O2 vient de traiter le ticket TK22 (action #1). Dans ces circonstances, au lieu d'affecter l'action #3 (recharge du véhicule V3) au ticket TK23 de l'opérateur O2, le serveur S peut lui affecter l'action #2 consistant à se rendre dans la sous-zone SG1 pour déplacer le véhicule V2 vers la sous-zone SG4, cette action étant initialement affectée à l'opérateur O1 par le ticket TK13.Le serveur S peut également supprimer ce ticket TK13 de la liste de l'opérateur O1 ou affecter à ce ticket TK13 une autre action initialement dévolue à l'opérateur O2, par exemple l'action #3.

Selon un autre exemple, alors que l'opérateur O1 recharge le véhicule V8 (ticket TK11, action #8), le véhicule V5 est réservé par un utilisateur. Dans ces circonstances, le serveur S peut soit supprimer le troisième ticket TK12 (action #5) de la liste de tickets affectés à l'opérateur O1, soit affecter à ce ticket une autre action.

Selon un mode de réalisation, lorsqu'un opérateur signale au serveur S qu'il va traiter un ticket, ledit serveur rend momentanément indisponible le véhicule concerné. Par exemple, lorsque l'opérateur O2 a fini de traiter le ticket TK21 (action #10) et qu'il indique maintenant traiter le ticket TK22 (action #1), le serveur S transmet une requête au véhicule V1 pour le rendre indisponible jusqu'à l'arrivée de l'opérateur O2. Le serveur S s'assure ainsi que l'opérateur O2 ait le temps de venir dans la sous-zone SG1 et puisse trouver le véhicule V1 afin de le déplacer dans la sous-zone SG4.

### Produit programme d'ordinateur

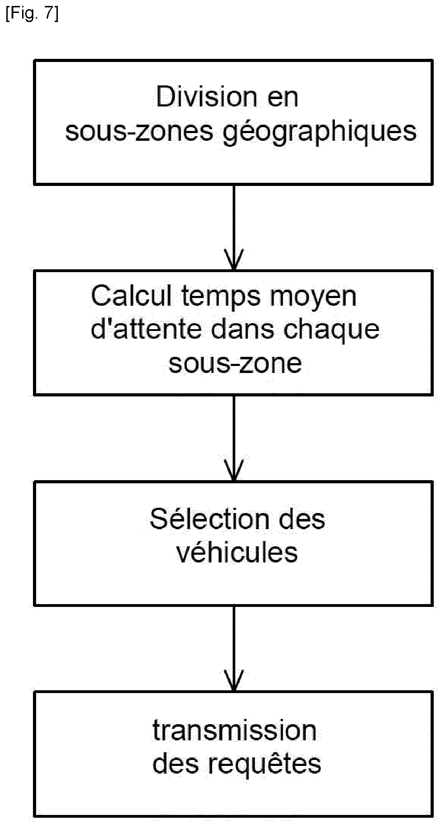

Selon encore un autre aspect, l'invention concerne un produit programme d'ordinateur comprenant des instructions de code pour l'exécution du procédé décrit précédemment, et celui dont les principales étapes sont mentionnées dans la figure 7, lorsqu'il est exécuté par le serveur S.

L'agencement des différents éléments et/ou moyens et/ou étapes de l'invention, dans les modes de réalisation décrits ci-dessus, ne doit pas être compris comme exigeant un tel agencement dans toutes les implémentations.

Enfin, une ou plusieurs caractéristiques et/ou étapes exposées seulement dans un mode ou exemple de réalisation peuvent être généralisées aux autres modes de réalisation. De même, une ou plusieurs caractéristiques et/ou étapes exposées seulement dans un mode ou exemple de réalisation peuvent être combinées avec une ou plusieurs autres caractéristiques et/ou étapes exposées seulement dans un autre mode de réalisation.

## Revendications

1. Procédé pour modifier la durée de mise en veille et/ou la fréquence de réactivation et/ou la durée de réveil d'un équipement informatique(EQVej) embarqué dans un véhicule (Vj) appartenant à une flotte de véhicules partagés (V1-V10) localisés dans une zone géographique (G) définie, lequel équipement est connecté à une batterie (Bat), ledit procédé comportant les étapes suivantes :
- préparamétrer une durée de mise en veille et/ou une fréquence de réactivation et/ou une durée de réveil d'un équipement (EQVej) embarqué dans chaque véhicule (Vj) de la flotte,
- opérer un maillage de zone géographique (G) pour la diviser en sous-zones géographiques (SG1-SG4),
- mettre en œuvre un processus informatique logique dans un calculateur (35) lequel processus est adapté pour calculer, pour chaque sous-zone géographique (SG1-SG4), un temps moyen d'attente (ITm-SGi) pendant lequel un véhicule (V1-V10) disponible à la réservation dans la sous-zone concernée ne sera pas réservé, ledit calcul étant réalisé en exécutant dans ledit calculateur une application informatique basée sur un modèle d'intelligence artificielle dont des données d'apprentissage d'un algorithme d'apprentissage statique comprennent un historique de requêtes de réservation effectives de véhicules (V1-V10) de la flotte,
- modifier ladite durée de mise en veille et/ou ladite fréquence de réactivation et/ou ladite durée de réveil d'un équipement (EQVe3) embarqué dans un véhicule (V3) de la flotte qui est disponible à la réservation, en fonction du temps moyen d'attente calculé (ITm-SG3) dans la sous-zone géographique (SG1) où est localisé ledit véhicule.

2. Procédé selon la revendication 1, dans lequel l'algorithme d'apprentissage statistique est entraîné pour calculer de manière prédictive, à une date donnée et à un instant donné, le temps moyen d'attente (ITm-SGi) dans chaque sous-zone géographique (SG1-SG4) et dans lequel :
- les données d'entrée d'apprentissage de l'algorithme d'apprentissage statistique proviennent :
-- de l'historique de requêtes de réservation effectives de véhicules (V1-V10) de la flotte, et
-- de tout ou partie des données suivantes : la localisation des sous-zones géographiques (SG1-SG4) depuis lesquelles des requêtes de réservation ont été émises au court des dernières X heures, avec X compris entre 1 et 168 ; la distance des sous-zones géographiques (SG1-SG4) par rapport à un point prédéfini de la zone géographique (G) ; pour chaque véhicule (V1-V10) de la flotte auxquels sont affectés un statut « disponible à la réservation » ou un statut « indisponible à la réservation », les heures effectives auxquelles leur statut passe de « disponible à la réservation » à « indisponible à la réservation » et inversement ; des données climatologiques ; des données relatives à une date et heure d'évènements intervenus dans la zone géographique (G) et/ou dans l'une de ses sous-zones (SG1-SG4) ; le nombre d'utilisateurs ayant libéré des véhicules de la flotte au court des dernières Y heures, avec Y compris entre 1 et 168 dans chaque sous-zone géographique (SG1-SG4),
- les données de sortie d'apprentissage sont les temps d'attente réels des véhicules (V1-V10) de la flotte dans chaque sous-zone géographique (SG1-SG4).

3. Procédé selon la revendication 2, dans lequel :
- au moment du calcul, les données d'entrée (De1-Den) de l'algorithme d'apprentissage entraîné (ME) sont tout ou partie des données suivantes : l'identification d'une sous-zone géographique (SGi) concernée ; la localisation des sous-zones géographiques (SG1-SG4) depuis lesquelles des requêtes de réservation ont été émises au court des dernières X heures, avec X compris entre 1 et 168 ; la distance de la sous-zone géographique (SGi) concernée par rapport à un point prédéfini de la zone géographique (G) ; des données climatologiques dans la zone géographique (G) et/ou dans la sous-zone géographique (SGi) concernée ; des données relatives à l'heure d'évènements intervenus et/ou à intervenir à la date donnée, dans la zone géographique (G) et/ou dans la sous-zone géographique (SGi) concernée et/ou dans les autres sous-zones géographiques (SG1-SG4) ; le nombre d'utilisateurs ayant libéré des véhicules de la flotte au court des dernières Y heures, avec Y compris entre 1 et 168 dans la sous-zone géographique (SGi) concernée,
- la donnée de sortie de l'algorithme d'apprentissage entraîné (ME) est le temps moyen d'attente (ITm-SGi) dans la sous-zone géographique concernée (SGi).

4. Procédé selon la revendication 1, dans lequel l'algorithme d'apprentissage statistique est entraîné pour calculer de manière prédictive, à une date donnée et à un instant donné, le temps moyen d'attente (ITm-SGi) dans chaque sous-zone géographique (SG1-SG4) et dans lequel :
- les données d'entrée d'apprentissage de l'algorithme d'apprentissage statistique proviennent :
-- de l'historique de requêtes de réservation effectives de véhicules (V1-V10) de la flotte, et
-- de tout ou partie des données suivantes : le type et le modèle chaque véhicule (V1-V10) de la flotte ; la localisation (V1-V10) des véhicules de la flotte au moment de leur réservation ; la distance des véhicules (V1-V10) de la flotte au moment de leur réservation par rapport à un point prédéfini de la zone géographique (G) ; pour chaque véhicule (V1-V10) de la flotte auxquels sont affectés un statut « disponible à la réservation » ou un statut « indisponible à la réservation », les heures effectives auxquelles leur statut est passé de « disponible à la réservation » à « indisponible à la réservation » et inversement ; des données climatologiques ; des données relatives à la date et l'heure d'évènements intervenus dans la zone géographique (G) et/ou dans l'une de ses sous-zones géographiques (SG1-SG4) ; le nombre d'utilisateurs ayant libéré des véhicules (V1-V10) de la flotte au court des dernières Y heures, avec Y compris entre 1 et 168 dans chaque sous-zone géographique (SG1-SG4),
- les données de sortie d'apprentissage sont les temps d'attente réels des véhicules (V1-V10) de la flotte.

5. Procédé selon la revendication 4, dans lequel :
- au moment du calcul, les données d'entrée (De1-Den) de l'algorithme d'apprentissage entraîné (ME) sont tout ou partie des données suivantes : l'identification d'un véhicule (Vj) concerné de la flotte ; la localisation du véhicule concerné (Vj) au moment du calcul ; pour le véhicule (Vj) concerné, les heures effectives auxquelles son statut est passé de « disponible » à « indisponible » et inversement au court des dernières X heures, avec X compris entre 1 et 168 ; la distance séparant le véhicule (Vj) concerné d'un point prédéfini de la zone géographique (G) au moment du calcul ; des données climatologiques dans la zone géographique (G) et/ou dans une sous-zone géographique (SG1-SG4) concernée ; des données relatives à l'heure d'évènements intervenus et/ou à intervenir à la date donnée, dans la zone géographique (G) et/ou dans les sous-zones géographiques (SG1-SG4) ; le nombre d'utilisateurs ayant libéré des véhicules au court des dernières Y heures, avec Y compris entre 1 et 168, dans les différentes sous-zones géographiques (SG1-SG4),
- la donnée de sortie de l'algorithme d'apprentissage entraîné (ME) est le temps moyen d'attente (ITm-Vj) du véhicule concerné (Vj).

6. Procédé selon la revendication 1, dans lequel le temps moyen d'attente (ITm-SGi) dans une sous-zone géographique (SGi) est calculé en moyennant les temps moyens d'attente (ITm-Vj) des véhicules disponibles à la réservation se trouvant dans ladite sous-zone.

7. Système adapté pour la mise en œuvre du procédé selon l'une des revendications précédentes, comportant un serveur informatique (S) adapté pour exécuter les étapes dudit procédé.

8. Produit programme d'ordinateur comprenant des instructions de code pour l'exécution d'un procédé selon la revendication 1, lorsqu'il est exécuté par un serveur informatique (S).

## Patentansprüche

1. Verfahren zum Ändern der Standby-Dauer und/oder der Reaktivierungshäufigkeit und/oder der Aufwachdauer einer IT-Ausrüstung(EQVej), die in einem Fahrzeug (Vj) eingebaut ist, das zu einer Flotte von gemeinsam genutzten Fahrzeugen (V1-V10) gehört, die sich in einem definierten geografischen Bereich (G) befinden, wobei die Ausrüstung mit einer Batterie (Bat) verbunden ist, wobei das Verfahren die folgenden Schritte umfasst:
- Voreinstellen einer Standby-Dauer und/oder einer Reaktivierungshäufigkeit und/oder einer Aufwachdauer einer Ausrüstung (EQVej), die in jedem Fahrzeug (Vj) der Flotte eingebaut ist,
- Betreiben eines geografischen Bereichsnetzes (G), um es in geografische Unterbereiche (SG1-SG4) aufzuteilen,
- Implementieren eines logischen Computerprozesses in einem Rechner (35), wobei der Prozess dazu geeignet ist, für jeden geografischen Unterbereich (SG1-SG4) eine durchschnittliche Wartezeit (ITm-SGi) zu berechnen, während der eine zur Reservierung verfügbares Fahrzeug (V1-V10) in dem betroffenen Unterbereich nicht reserviert wird, wobei die Berechnung ausgeführt wird, indem in dem Rechner eine Computeranwendung ausgeführt wird, die auf einem Modell der künstlichen Intelligenz basiert, dessen Lerndaten eines statistischen Lernalgorithmus eine Historie von tatsächlichen Reservierungsanfragen für Fahrzeuge (V1-V10) der Flotte umfassen,
- Ändern der Standby-Dauer und/oder der Reaktivierungshäufigkeit und/oder der Aufwachdauer einer Ausrüstung (EQVe3), die in einem Fahrzeug (V3) der Flotte eingebaut ist, das zur Reservierung verfügbar ist, in Abhängigkeit von der berechneten durchschnittlichen Wartezeit (ITm-SG3) in dem geografischen Unterbereich (SG1), in dem sich das Fahrzeug befindet.

2. Verfahren nach Anspruch 1, wobei der statistische Lernalgorithmus trainiert wird, die durchschnittliche Wartezeit (ITm-SGi) in jedem geografischen Unterbereich (SG1-SG4) zu einem bestimmten Datum und zu einem bestimmten Zeitpunkt prädiktiv zu berechnen, und wobei:
- die Lerneingangsdaten des statistischen Lernalgorithmus aus Folgendem stammen:
-- der Historie der tatsächlichen Reservierungsanfragen für Fahrzeuge (V1-V10) der Flotte, und
-- allen oder einigen der folgenden Daten: dem Standort der geografischen Unterbereiche (SG1-SG4), aus denen in den letzten X Stunden Reservierungsanfragen gestellt wurden, wobei X zwischen 1 und 168 liegt; der Entfernung der geografischen Unterbereiche (SG1-SG4) von einem vordefinierten Punkt innerhalb des geografischen Bereichs (G); für jedes Fahrzeug (V1-V10) der Flotte, dem ein Status "verfügbar für Reservierungen" oder ein Status "nicht verfügbar für Reservierungen" zugewiesen ist, den tatsächlichen Zeiten, zu denen sein Status von "verfügbar für Reservierungen" in "nicht verfügbar für Reservierungen" und umgekehrt geändert wurde; Klimadaten; Daten zu Datum und Uhrzeit von Ereignissen, die in dem geografischen Bereich (G) und/oder einem seiner Unterbereiche (SG1-SG4) eingetreten sind; der Anzahl der Nutzer, die in den letzten Y Stunden Fahrzeuge aus der Flotte freigegeben haben, wobei Y zwischen 1 und 168 in jedem geografischen Unterbereich (SG1-SG4) liegt,
- die Lernausgangsdaten die tatsächlichen Wartezeiten der Fahrzeuge (V1-V10) der Flotte in jedem geografischen Unterbereich (SG1-SG4) sind.

3. Verfahren nach Anspruch 2, wobei:
- die Eingangsdaten (De1-Den) des trainierten Lernalgorithmus (ME) zum Zeitpunkt der Berechnung ganz oder teilweise folgende Daten sind: die Identifikation eines betroffenen geografischen Unterbereichs (SGi); der Standort der geografischen Unterbereiche (SG1-SG4), von denen aus innerhalb der letzten X Stunden Reservierungsanfragen gesendet wurden, wobei X zwischen 1 und 168 liegt; die Entfernung des betroffenen geografischen Unterbereichs (SGi) in Bezug auf einen vordefinierten Punkt des geografischen Bereichs (G); Klimadaten in dem betroffenen geografischen Bereich (G) und/oder in dem betroffenen geografischen Unterbereich (SGi); Daten zur Uhrzeit der Ereignisse, die zu dem angegebenen Datum eingetreten sind und/oder eintreten werden, in dem betroffenen geografischen Bereich (G) und/oder in dem betroffenen geografischen Unterbereich (SGi) und/oder in den anderen geografischen Unterbereichen (SG1-SG4); die Anzahl der Nutzer, die in den letzten Y Stunden Fahrzeuge aus der Flotte freigegeben haben, wobei Y zwischen 1 und 168 in dem betroffenen geografischen Unterbereich (SGi) liegt,
- die Ausgangsdaten des trainierten Lernalgorithmus (ME) die durchschnittliche Wartezeit (ITm-SGi) im betroffenen geografischen Unterbereich (SGi) ist.

4. Verfahren nach Anspruch 1, wobei der statistische Lernalgorithmus trainiert wird, die durchschnittliche Wartezeit (ITm-SGi) in jedem geografischen Unterbereich (SG1-SG4) zu einem bestimmten Datum und zu einem bestimmten Zeitpunkt prädiktiv zu berechnen, und wobei:
- die Lerneingangsdaten des statistischen Lernalgorithmus aus Folgendem stammen:
-- der Historie der tatsächlichen Reservierungsanfragen für Fahrzeuge (V1-V10) der Flotte, und
-- allen oder einigen der folgenden Daten: dem Typ und dem Modell jedes Fahrzeugs (V1-V10) der Flotte; dem Standort (V1-V10) der Fahrzeuge der Flotte zum Zeitpunkt ihrer Reservierung; der Entfernung der Fahrzeuge (V1-V10) der Flotte zum Zeitpunkt ihrer Reservierung in Bezug auf einen vordefinierten Punkt des geografischen Bereichs (G); für jedes Fahrzeug (V1-V10) der Flotte, dem ein Status "verfügbar für Reservierungen" oder "nicht verfügbar für Reservierungen" zugewiesen ist, den tatsächlichen Zeiten, zu denen sein Status von "verfügbar für Reservierungen" in "nicht verfügbar für Reservierungen" und umgekehrt geändert wurde; Klimadaten; Daten zu Datum und Uhrzeit von Ereignissen, die in dem geografischen Bereich (G) und/oder einem seiner geografischen Unterbereiche (SG1-SG4) eingetreten sind; der Anzahl der Nutzer, die in den letzten Y Stunden Fahrzeuge (V1-V10) aus der Flotte freigegeben haben, wobei Y zwischen 1 und 168 in jedem geografischen Unterbereich (SG1-SG4) liegt,
- die Lernausgangsdaten die tatsächlichen Wartezeiten der Fahrzeuge (V1-V10) der Flotte sind.

5. Verfahren nach Anspruch 4, wobei:
- die Eingangsdaten (De1-Den) des trainierten Lernalgorithmus (ME) zum Zeitpunkt der Berechnung ganz oder teilweise folgende Daten sind: die Identifikation eines betroffenen Fahrzeugs (Vj) der Flotte; der Standort des betroffenen Fahrzeugs (Vj) zum Zeitpunkt der Berechnung; für das betroffene Fahrzeug (Vj) die tatsächlichen Zeiten, zu denen sein Status in den letzten X Stunden von "verfügbar" in "nicht verfügbar" und umgekehrt geändert wurde, wobei X zwischen 1 und 168 liegt; die Entfernung zwischen dem betroffenen Fahrzeug (Vj) und einem vordefinierten Punkt des geografischen Bereichs (G) zum Zeitpunkt der Berechnung; Klimadaten im betroffenen geografischen Bereich (G) und/oder in einem betroffenen geografischen Unterbereich (SG1-SG4); Daten über die Uhrzeit der Ereignisse, die an dem angegebenen Datum eingetreten sind und/oder eintreten werden, im geografischen Bereich (G) und/oder in den geografischen Unterbereichen (SG1-SG4); die Anzahl der Nutzer, die in den letzten Y Stunden Fahrzeuge freigegeben haben, wobei Y zwischen 1 und 168 in den verschiedenen geografischen Unterbereichen (SG1-SG4) liegt,
- die Ausgangsdaten des trainierten Lernalgorithmus (ME) die durchschnittliche Wartezeit (ITm-Vj) des betroffenen Fahrzeugs (Vj) ist.

6. Verfahren nach Anspruch 1, wobei die durchschnittliche Wartezeit (ITm-SGi) in einem geografischen Unterbereich (SGi) durch Mittelung der durchschnittlichen Wartezeiten (ITm-Vj) der zur Reservierung verfügbaren Fahrzeuge in dem Unterbereich berechnet wird.

7. System, das zum Durchführen des Verfahrens nach einem der vorhergehenden Ansprüche geeignet ist und das einen Computerserver (S) umfasst, der zum Ausführen der Schritte des Verfahrens geeignet ist.

8. Computerprogrammprodukt, das Codeanweisungen zur Ausführung eines Verfahrens nach Anspruch 1 umfasst, wenn es von einem Computerserver (S) ausgeführt wird.

## Claims

1. A method for modifying the standby duration and/or the reactivation frequency and/or the wake-up duration of a computer equipment (EQVej) embedded in a vehicle (Vj) belonging to a fleet of shared vehicles (V1-V10) located in a defined geographical area (G), which equipment is connected to a battery (Bat), said method comprising the following steps:
- pre-parameterising a standby duration and/or a reactivation frequency and/or a wake-up duration of an equipment (EQVej) embedded in each vehicle (Vj) of the fleet,
- performing a geographical area meshing (G) to divide it into geographical sub-areas (SG1-SG4),
- implementing a logical computing process in a calculator (35) which process is adapted to calculate, for each geographical sub-area (SG1-SG4), an average waiting time (ITm-SGi) during which a vehicle (V1-V10) available for reservation in the sub-area concerned shall not be reserved, said calculation being carried out by executing in said calculator a computing application based on an artificial intelligence model whose learning data of a statistical learning algorithm comprises a history of actual reservation requests of vehicles (V1-V10) of the fleet,
- modifying said standby duration and/or said reactivation frequency and/or said wake-up duration of an equipment (EQVe3) embedded in a vehicle (V3) of the fleet that is available for reservation, according to the average waiting time calculated (ITm-SG3) in the geographical sub-area (SG1) where said vehicle is located.

2. The method of claim 1, wherein the statistical learning algorithm is trained to predictively calculate, at a given date and instant, the mean waiting time (ITm-SGi) in each geographical sub-area (SG1-SG4) and wherein:
- the learning input data of the statistical learning algorithm are derived from:
-- the history of actual vehicle reservation requests (V1-V10) of the fleet, and
-- all or part of the following data: the location of the geographical sub-areas (SG1-SG4) from which reservation requests have been issued within the last X hours, with X between 1 and 168; the distance of the geographical sub-areas (SG1-SG4) relative to a predefined point of the geographical area (G); for each vehicle (V1-V10) of the fleet to which an "available for reservation" status or an "unavailable for reservation" status is assigned, the actual times at which their status changes from "available for reservation" to "unavailable for reservation" and vice versa; weather data; data relating to a date and time of events occurring in the geographical area (G) and/or in one of its sub-areas (SG1-SG4); the number of users who have released vehicles of the fleet during the last Y hours, with Y between 1 and 168 in each geographical sub-area (SG1-SG4),
- the learning output data are the actual waiting times of the vehicles (V1-V10) of the fleet in each geographical sub-area (SG1-SG4).

3. The method according to claim 2, wherein:
- at the time of calculation, the input data (De1-Den) of the trained learning algorithm (ME) are all or part of the following data: the identification of a geographical sub-area (SGi) concerned; the location of the geographical sub-areas (SG1-SG4) from which reservation requests were issued within the last X hours, with X between 1 and 168; the distance of the geographical sub-area (SGi) concerned relative to a predefined point of the geographical area (G); weather data in the geographical area (G) and/or in the geographical sub-area (SGi) concerned; data relating to the time of events occurring and/or to occur on the given date, in the geographical area (G) and/or in the geographical sub-area (SGi) concerned and/or in the other geographical sub-areas (SG1-SG4); the number of users who have released vehicles of the fleet during the last Y hours, with Y between 1 and 168 in the geographical sub-area (SGi) concerned,
- the output piece of data of the trained learning algorithm (ME) is the mean waiting time (ITm-SGi) in the geographical sub-area (SGi) concerned.

4. The method of claim 1, wherein the statistical learning algorithm is trained to predictively calculate, at a given date and instant, the mean waiting time (ITm-SGi) in each geographical sub-area (SG1-SG4) and wherein:
- the learning input data of the statistical learning algorithm are derived from:
-- the history of actual vehicle reservation requests (V1-V10) of the fleet, and
-- all or part of the following data: the type and model of each vehicle (V1-V10) of the fleet; the location (V1-V10) of vehicles of the fleet at the time of their reservation; the distance of the vehicles (V1-V10) of the fleet at the time of their reservation relative to a predefined point of the geographical area (G); for each vehicle (V1-V10) of the fleet to which a "available for reservation" status or a "unavailable for reservation" status is assigned, the actual times at which their status has changed from "available for reservation" to "unavailable for reservation" and vice versa; weather data; data relating to the date and time of events occurring in the geographical area (G) and/or in one of its geographical sub-areas (SG1-SG4); the number of users who have released vehicles (V1-V10) from the fleet during the last Y hours, with Y between 1 and 168 in each geographical sub-area (SG1-SG4),
- the learning output data are the actual waiting times of the vehicles (V1-V10) in the fleet.

5. The method according to claim 4, wherein:
- at the time of calculation, the input data (De1-Den) of the trained learning algorithm (ME) are all or part of the following data: the identification of a vehicle (Vj) concerned of the fleet; the location of the vehicle (Vj) concerned at the time of calculation; for the vehicle (Vj) concerned, the actual times at which its status changed from "available" to "unavailable" and vice versa within the last X hours, with X between 1 and 168; the distance separating the vehicle (Vj) concerned from a predefined point of the geographical area (G) at the time of the calculation; weather data in the geographical area (G) and/or in a geographical sub-area (SG1-SG4) concerned; data relating to the time of events occurring and/or to occur on the given date, in the geographical area (G) and/or in the geographical sub-areas (SG1-SG4); the number of users who have released vehicles in the last Y hours, with Y between 1 and 168, in the different geographical sub-areas (SG1-SG4),
- the output piece of data of the trained learning algorithm (ME) is the mean waiting time (ITm-Vj) of the vehicle (Vj) concerned.

6. The method according to claim 1, wherein the average waiting time (ITm-SGi) in a geographical sub-area (SGi) is calculated by averaging the average waiting times (ITm-Vj) of the vehicles available for reservation located in said sub-area.

7. A system adapted to implement the method according to one of the preceding claims, including a computer server (S) adapted to execute the steps of said method.

8. A computer program product comprising code instructions for executing a method according to claim 1, when executed by a computing server (S).
